# EUROPÄISCHE PATENTSCHRIFT

(11) **EP 3 044 539 B1**
(45) Veröffentlichungstag und Bekanntmachung des Hinweises auf die Patenterteilung: **23.08.2017**
(21) Anmeldenummer: 14777536.5
(22) Anmeldetag: 03.09.2014
(51) Int. Cl.: G01B 11/30, G01B 5/28

(54) **RAUHEITS-MESSINSTRUMENT ZUM EINSATZ IN EINER WERKZEUGMASCHINE UND VERFAHREN ZUR RAUHEITSMESSUNG IN EINER WERKZEUGMASCHINE**
ROUGHNESS MEASURING INSTRUMENT FOR USE IN A MACHINE TOOL AND METHOD FOR MEASURING ROUGHNESS IN A MACHINE TOOL
INSTRUMENT DE MESURE DE RUGOSITÉ DESTINÉ À ÊTRE UTILISÉ DANS UNE MACHINE-OUTIL ET PROCÉDÉ DE MESURE DE RUGOSITÉ DANS UNE MACHINE-OUTIL

(30) Priorität: 13.09.2013 DE 102013015237
(43) Veröffentlichungstag der Anmeldung: 20.07.2016
(73) Patentinhaber: Blum-Novotest GmbH, 88287 Grünkraut-Gullen (DE)
(72) Erfinder: BUCHER, Heribert, 88069 Tettnang (DE); REISER, Wolfgang, 88267 Vogt (DE); MOERSCH, Norbert, 88239 Wangen (DE)
(74) Vertreter: Schmidt, Steffen J.
(86) Internationale Anmeldenummer: PCT/EP2014/068717
(87) Internationale Veröffentlichungsnummer: WO 2015/036299

(56) Entgegenhaltungen:
- DE-A1- 10 206 146
- DE-A1-102007 041 272
- US-A- 3 250 012
- Anonym: "Precicom 225", PWK Knöbber , 30. September 2011 (2011-09-30), Seiten 1-8, XP002733626, Gefunden im Internet: URL:http://www.pwk-knoebber-home.de/downlo ads/aktionen/2011/PRECICOM_72dpi.pdf [gefunden am 2014-12-11] in der Anmeldung erwähnt

## Beschreibung

### Einleitung

Hier wird ein Verfahren zur Messung der Rauheit eines in einer Werkzeugmaschine bearbeiteten Werkstücks beschrieben. Außerdem werden die entsprechenden Vorrichtungskomponenten wie der spezifisch dazu eingerichtete Messtaster und die spezifisch dazu eingerichtete Tastspitze erläutert. Details hierzu sind in den Ansprüchen definiert; aber auch die Beschreibung und die Zeichnung enthalten relevante Angaben zur Struktur und zur Funktionsweise sowie zu Varianten des Verfahrens und den Vorrichtungskomponenten.

### Hintergrund

Bei einem in einer Werkzeugmaschine bearbeiteten Werkstück ist eine maßgebliche Forderung an dessen Oberfläche, dass diese angesichts der von der Oberfläche des Werkstücks zu erfüllenden Funktion (z.B. Lagerfläche, Leitfähigkeit, Sichtfläche, Haftfestigkeit, Reibung, Dichtung) kostengünstig hergestellt ist. Dazu sind die Eigenschaften der Oberfläche (z.B. geringe Reibung, große Kontaktfläche, definierte Mindestrauheit, scharfe Spitzen, geringer Abrieb) möglichst genau zu definieren und im Rahmen der Produktion zu überprüfen, damit die vorgesehene Funktion von der Oberfläche optimal erfüllt werden kann.

Reale Werkstückoberflächen (Ist-Oberflächen) weichen von ihrer idealen Form (Soll-Oberfläche) ab. Diese Unterschiede werden in mehrere Kategorien unterteilt. Die Ist-Oberfläche wird in Wellen unterschiedlicher Wellenlängen aufgeteilt. Hierbei nimmt die Wellenlänge mit der Ordnung der Gestaltabweichungen (1. Ordnung: Formabweichung, 2. Ordnung: Welligkeit, 3. Ordnung: Rauheit - Rillen, 4. Ordnung: Rauheit - Riefen, Schuppen, Kuppen) ab.

Um Oberflächenkennwerte an Werkstücken zu bestimmen, werden oft taktile Messgeräte eingesetzt. In taktilen Messgeräten wird zur Rauheitsbestimmung die Oberfläche mit einer Diamantspitze abgefahren. Dieses Gerät hat meist einen induktiven Wandler. Dabei fährt ein Taster mit der Diamantspitze senkrecht zur Rillenrichtung über die Oberfläche des Werkstücks und der senkrechte Hub der Tastspitze wird in dem induktiven Wandler in ein elektrisches Signal umgesetzt. Dieses Messsignal des Primärprofils wird in der Regel mit Hilfe eines Analog-Digital-Wandlers in einen Auswerte-Computer eingelesen.

Ein solches Oberflächenprüfgerät arbeitet unidirektional, d.h. der Taster mit der Diamantspitze kann nur in eine einzige Richtung relativ zur Werkstückoberfläche gezogen werden. Dieses Oberflächenprüfgerät hat drei Komponenten, nämlich Taster, Vorschubapparat und Auswertegerät mit Anzeige und Dokumentation.

Der Taster wandelt die Vertikalbewegung der Tastspitze in ein elektrisches Signal. Dazu hat der Taster eine hochpräzise gelagerte Tastspitze und den induktiven Wandler. Zudem kann der Taster durch eine Gleitkufe ergänzt werden. Für die große Vielfalt an den zu messenden Geometrien, wie etwa Flächen, Wellen, Bohrungen, Evolventen, etc., existiert eine Vielfalt unterschiedlicher Tasterformen. Grundsätzlich wird zwischen Einkufentastern, Zweikufentastern und Bezugsebenentastern unterschieden. Taster mit Gleitkufen kommen vor allem in Handgeräten zum Einsatz. Die Gleitkufe folgt der Welligkeit. Sie wirkt als Hochpassfilter und lässt die makroskopische Form des Profils unberücksichtigt. Gleitkufentaster geben keine exakten Angaben über Form und Welligkeit. Solche Taster kommen vor allem im Werkstattbereich zum Einsatz. Das Bezugsebenentastsystem misst gegen eine Referenzfläche und liefert somit eine nahezu unverfälschte Abbildung des Primär-Profils. Als Tastspitze werden Diamantkegel mit einer abgerundeten Spitze verwendet. Nennwerte für die Tastspitze sind der Spitzenradius (z. B. 2 µm, 5 µm oder 10 µm) sowie der Kegelwinkel des Diamantkegels, also dessen Spitze, mit z. B. 60° oder 90°.

Der Vorschubapparat führt den Taster kontinuierlich und mit konstanter Geschwindigkeit über die Werkstück-Oberfläche. Dabei wird zwischen Vorschubapparaten mit und ohne Bezugsebene sowie Rotationsvorschubapparaten unterschieden. Die meisten Messgeräte haben einen Vorschubapparat mit eingebauter Bezugsebene. Sie erlauben den Einsatz von Tastern mit und ohne Gleitkufe. Vorschubapparate ohne Bezugsebene gestatten ausschließlich den Einsatz von Gleitkufentastern. Nur Vorschubapparate mit eingebauter Bezugsebene in Verbindung mit einem Taster ohne Gleitkufe gestatten das exakte Erfassen von Form, Welligkeit und Rauheit. Die Genauigkeit der Formmessung hängt in erster Linie von der Genauigkeit der Bezugsebene ab. Ein Rotationsvorschubapparat dreht eine zylinderförmige Probe unter dem feststehenden Taster hindurch. Rundlauffehler des Werkstückes lassen sich durch den Einsatz von Gleitkufentastern eliminieren.

Allerdings ist diese Art von Oberflächenprüfgerät insofern problematisch beim Einsatz in der Produktion von Werkstücken, als das Werkstück aus der Spindel der Werkzeugmaschine auszuspannen und in das Oberflächenprüfgerät einzubringen ist, um seine Rauheit zu messen. Dies ist nachteilig, weil ein Wieder-Einspannen des Werkstücks in die Werkzeugmaschine in der Regel zum Verlust der Maßhaltigkeit bei der weiteren Bearbeitung im Verhältnis zu den vorher ausgeführten Bearbeitungsschritten führt. Daher wird üblicherweise die Oberflächenbeschaffenheit eines Werkstücks erst nach Abschluss der Bearbeitung in der Werkzeugmaschine geprüft. Ein Nacharbeiten ist dann aber nur in Ausnahmefällen möglich. So zählt bei Nichterfüllen der geforderten Oberflächenbeschaffenheit das Werkstück zum Ausschuss.

Daher ist zur Prüfung der Oberflächenbeschaffenheit eines Werkstücks während der Bearbeitung in der Werkzeugmaschine der Bearbeitungsprozess anzuhalten und der Arbeitsraum der Werkzeugmaschine einem Werker zugänglich zu machen. Dann kann der Werker mit einem manuellen Oberflächenprüfgerät das Vorliegen der geforderten Oberflächenbeschaffenheit an dem Werkstück kontrollieren.

Anschließend ist das Messergebnis zu analysieren und zu bewerten:
a) die geforderte Oberflächenbeschaffenheit wurde erreicht, das Werkstück ist in Ordnung;
b) die geforderte Oberflächenbeschaffenheit wurde nicht erreicht, das Werkstück ist nicht in Ordnung, kann aber nachgearbeitet werden; oder
c) die geforderte Oberflächenbeschaffenheit wurde nicht erreicht, das Werkstück ist nicht in Ordnung und kann auch nicht nachgearbeitet werden.
Nun ist ggf. die Bearbeitung fortzusetzen.

Diese Abfolge ist jedoch so zeitintensiv, dass sie sich allenfalls zur statistischen Überprüfung eines Herstellungsloses, nicht aber zur Überprüfung der geforderten Oberflächenbeschaffenheit an jedem einzelnen Werkstück ausführen lässt.

Außerdem kann im Rahmen der statistischen Überprüfung festgestellt werden:
a) das Werkzeug ist in Ordnung;
b) die Bearbeitungsparameter (Vorschub, Drehzahl, Spantiefe, etc. sind in Ordnung); und
c) die Bearbeitungsbedingungen sind in Ordnung (Vibration der Werkzeugmaschine, Spindelrundlauf, etc.)

Außerdem sind manche Oberflächen für portable Prüfgeräte gar nicht zugänglich.

Darüber hinaus ist aufgrund der gegebenen geometrischen Verhältnisse und Messprinzipien mit bekannten Oberflächenprüfgeräten die Messung der Oberflächenbeschaffenheit einer Bohrung in einem Werkstück allenfalls in Längsrichtung der Bohrung, nicht aber entlang des Umfangs möglich. So ist es z.B. räumlich ausgeschlossen, einen Taster mit Diamantspitze entlang einer Umfangslinie einer Bohrung mit z.B. 5mm bis z.B. 150mm über die Oberfläche der Bohrung in dem Werkstück zu führen und dabei den Hub der Tastspitze orthonormal zur Oberfläche der Bohrung zu erfassen. Derartige Messungen sind bisher nur mit Spezialgeräten unter Laborbedingungen möglich.

Die Beurteilung der Oberflächenrauheit ist demzufolge bisher nur als nachgelagerter Kontrollschritt oder als manueller Arbeitsgang am aufgespannten Werkstück möglich. Trotz Verschleiß oder Mikroausbrüchen an der Schneide kann zwar das Fertigungsmaß bei manchen Bearbeitungsschritten noch innerhalb der Toleranz oder den Eingriffsgrenzen liegen; die Oberflächenrauheit kann dagegen bereits außerhalb der Spezifikation liegen. Das fehlende Glied für die prozessnahe Überwachung der Oberflächenqualität ist ein Gerät zur Messung der Rauheit, welches in der Werkzeugmaschine vollautomatisch eingesetzt wird. Weder die manuelle interne noch die klassische externe Rauheitsmessung sind solch praxisorientierte Lösungen.

Vorrichtungen und Verfahren zur Konturmessung in einer Werkzeugmaschine sind aus dem Stand der Technik bekannt. In diesem Zusammenhang beschreibt beispielsweise das Dokument DE 10 2007 041 272 A1 ein Messsystem mit multidirektionaler Messtastanordnung zur berührenden Messung an stehenden und rotierenden Werkzeugen in einer Werkzeugmaschine. Das Messsystem ist mit unterschiedlichen Tastelementen, die eine pyramiden- oder kegel(stumpf)-förmige Gestalt besitzen, zur Durchführung der Konturmessung offenbart. Allerdings werden hier mit dem Messtaster lediglich die Abmessungen eines stehenden Werkzeuges ermittelt. Zur Werkstückvermessung eignet sich diese Anordnung nicht.

Eine weiterer multidirektionaler Messtaster zur Durchführung von Konturmessungen ist aus DE 102 62 188 B4 bekannt, welcher eine Aufnahme für auswechselbare Taststifte aufweist. Das Dokument beschreibt zudem unterschiedliche Taststifte mit kugel- oder scheibenförmigen Tastköpfen. Weiterhin sind Tastköpfe mit mehreren halbkugel- und scheibenförmige Taststellengeometrien beschrieben, die abhängig von der Antastrichtung eingesetzt werden.

Eine Vorrichtung zur Rauheitsmessung ist aus DE 102 06 146 A1 bekannt. Das Dokument offenbart ein Vibrationsnachweissystem mit Taststiftkonstruktion aufweisend einen Taststift der als geneigter Zylinder ausgestaltet ist und eine scheibenförmige Kontaktstelle aufweist.

Die Firmenschrift Präzisionswerkzeuge, Precicom 225 von Precitool Werkzeughandel GmbH & Co. KG offenbart Tastsysteme und Taststifte zur Kontur und Rauheitsmessung. Das Dokument offenbart zwei konische Tastspitzen mit einem Diamant, die zur Rauheitsmessung bestimmt sind.

Eine weitere Vorrichtung sowie ein Verfahren zur Kontur- und Rauheitsmessung ist in DE 199 47 001 A1 offenbart. Das Dokument beschreibt ein Instrument zur Messung der Oberflächenkontur und -rauheit, welches in der Lage ist die Messkraft auf einen angemessen Wert einzustellen, wenn mindestens der Taststift oder die Taststifthalterung ausgetauscht wurden.

Schließlich offenbart US 2002 / 0 059 041 A1 eine Vorrichtung und ein Verfahren zur Kontur- und Rauheitsmessung in einer Werkzeugmaschine. Die Vorrichtung kann dabei an Stelle des Werkzeuges in einer Werkzeugmaschine angebracht werden.

### Problem

Zur Messung der Oberflächenbeschaffenheit, insbesondere der Rauheit von Oberflächenteilbereichen auf einem Werkstück soll ein Verfahren und/oder eine Vorrichtung zur Steigerung der Produktivität und zum Einhalten höchstmöglicher Qualitätsanforderungen bereitgestellt werden.

### Lösung

Die Erfindung stellt einen multidirektionalen Rauheitsmesseinsatz gemäß unabhängigem Anspruch 1 sowie ein Rauheitsmessverfahren gemäß unabhängigem Anspruch 10 bereit.

Bei dem ersten Aspekt der Erfindung wird ein multidirektionaler Rauheitsmesseinsatz zum Bestimmen einer für die Rauheit einer Oberfläche charakteristischen Messgröße vorgeschlagen mit einem multidirektionalen Messwerk, mit einem Tragkörper, an dem zum Aufnehmen eines Taststifts eine Taststiftaufnahme angeordnet ist, einem Analogsensor, der Auslenkungen des Tragkörpers in für die Rauheit einer Oberfläche eines Werkstücks charakteristische Mess-Signale umsetzt, einem mit dem Tragkörper zu koppelnden Taststift, der einen stangenförmigen Schaft und einen an dem Schaft angebrachten Tastkopf umfasst, wobei der Tastkopf zumindest ein Abschnitt eines zumindest zu einem Abschnitt des stangenförmigen Schafts im Wesentlichen rotationssymmetrischen Prüfkörpers ist, oder wobei der Tastkopf zumindest ein Abschnitt eines im Wesentlichen rotationssymmetrischen Prüfkörpers ist, der an einem distalen Ende zumindest eines Abschnitts des stangenförmigen Schafts angeordnet ist. Der im Wesentlichen rotationssymmetrische Prüfkörper hat eine Doppelkegelgestalt oder Doppelkegelstumpfgestalt. Dabei ist ein Bereich des größten Durchmessers (Äquators) des Prüfkörpers als Kontaktstelle zu einer zu messenden Oberfläche eines Werkstücks ausgebildet, wobei die Kontaktstelle durch zwei Doppelkegel- oder Doppelkegelstumpf-Mantelflächen gebildet ist, und die Kontaktstelle im Bereich des größten Durchmessers des Prüfkörpers abgerundet ist.

Diese Anordnung erlaubt den Einsatz eines analog messenden Messtasters in einer Spindel in einer Werkzeugmaschine anstelle eines Werkzeugs. Dazu wird zu Rauheitsmessungen ein Messtaster mit einer Analogmessfunktion mit einem der hier beschriebenen Taststifte kombiniert. Der Messtaster ist ein analog abtastender Messtaster, welcher für die Rauheitsmessung in die Spindel der Werkzeugmaschine eingewechselt wird und die Messdaten oder in einem im Messtaster befindlichen Prozessor daraus errechnete Rauheitswerte oder dergl. drahtlos (durch eine Infrarot- oder Funkschnittstelle) oder drahtgebunden an die Steuerung der Werkzeugmaschine übermittelt. Ein analog abtastender Messtaster liefert ein ein Ansteigen und Abfallen einer Auslenkung der Tastspitze des Messeinsatzes wiedergebendes Mess-Signal. Dies ist im Unterschied zu einem digital abtastenden Messtaster zu sehen, welcher lediglich ein Ein-Aus- oder Aus-Ein-Schaltsignal liefert, wenn der Taststift um ein vorbestimmtes Maß aus seiner Ruhelage ausgelenkt wird.

Eine Variante eines solchen Messtasters funktioniert mit einem z.B. rotationssymmetrischen Messwerk, bei dem ein analoges Mess-Signal aus der Abschattung einer Miniaturlichtschranke generiert wird. Dabei wird der Beginn der Abschattung der Lichtschranke bei einer Auslenkung des Taststiftes um ein vorbestimmtes Maß aus seiner Ruhelage erkannt. Das analoge Mess-Signal kann außerdem auch den Anstieg und den Abfall der Abschattung wiedergeben, welche entstehen, wenn die Tastspitze des Messeinsatzes mehr oder weniger ausgelenkt wird. So wird ein analoges Mess-Signal generiert.

Die hier vorgestellten Varianten des Rauheitsmesseinsatzes sind insofern multidirektional, als bedingt durch das rotationssymmetrische Messwerk in Verbindung mit den spezifisch gestalteten Taststiften eine Antastung einer Oberfläche eines Werkstücks aus beliebiger Richtung erfolgen kann.

So ist es mit den multidirektionalen Rauheitsmesseinsätzen zum Beispiel möglich, in eine Bohrung oder eine in ein Werkstück eingefräste Ausnehmung mit dem Taststift einzufahren und dann seitlich an die Wandung der Bohrung oder der Ausfräsung die in beliebiger Orientierung des Rauheitsmesseinsatzes anzutasten. Dies ist mit herkömmlichen Rauheitsmessgeräten nicht möglich, da mit der Diamantkegelspitze nur in Richtung deren Kegelspitze gemessen werden kann.

Mit den multidirektionalen Rauheitsmesseinsätzen, welche in einer Spindel einer Werkzeugmaschine einzusetzen sind, wird die Werkzeugmaschine als Vorschubgerät genutzt. Außerdem stellt die Werkzeugmaschine auch die notwendige Bezugsebene bereit.

In einer Variante des multidirektionalen Rauheitsmesseinsatz ist dieser ausgestaltet mit einem Gehäuse, in dem ein ringförmiges Stützlager ausgebildet ist, das eine X, Y-Lagerebene und eine dazu normale zentrale Achse Z des Rauheitsmesseinsatzes definiert. Der Rauheitsmesseinsatz hat einen Tragkörper, an dem zum Aufnehmen eines Taststifts eine Taststiftaufnahme zentral angeordnet ist. Der Rauheitsmesseinsatz hat des Weiteren ein Übertragungsglied, das im Gehäuse entlang der zentralen Achse Z verschiebbar geführt ist, um beliebige Auslenkungen des Tragkörpers aus seiner Ruhelage in geradlinige Bewegungen umzusetzen. Das Übertragungsglied fluchtet in seiner Ruhelage zumindest abschnittsweise mit der zentralen Achse Z. Der Rauheitsmesseinsatz hat außerdem einen Analogsensor, der die geradlinigen Bewegungen des Übertragungsgliedes in für die Rauheit einer Oberfläche eines Werkstücks charakteristische Mess-Signale umsetzt. Mit dem Übertragungsglied ist ein stiftförmiges Bauteil oder der Taststift gekoppelt, das den stangenförmigen Schaft und den an dem Schaft angebrachten Tastkopf umfasst. Dabei umfasst der Tastkopf des multidirektionalen Rauheitsmesseinsatzes zumindest einen Abschnitt eines zu der zentralen Achse Z im Wesentlichen rotationssymmetrischen Prüfkörpers.

Hier kann der Analogsensor eine Lichtschranke der oben beschriebenen Art sein.

Bei dem multidirektionalen Rauheitsmesseinsatz kann der stangenförmige Schaft direkt oder indirekt in geradliniger Verlängerung mit dem Übertragungsglied gekoppelt, oder mit etwa 0° bis etwa 40° abgewinkelt, direkt oder indirekt mit dem Übertragungsglied gekoppelt sein. Der stangenförmige Schaft kann dabei etwa 20° bis etwa 30°, vorzugsweise etwa 25° abgewinkelt mit dem Übertragungsglied oder mit dem Tragkörper verbunden sein. Ist eine Oberfläche mit einer solchen Anordnung nicht erreichbar, ist auch eine Abwinkelung des Schaftes um 90° möglich.

Bei dem multidirektionalen Rauheitsmesseinsatz kann insbesondere die Kontaktstelle zumindest durch Abschnitte zweier Doppelkegel- oder Doppelkegelstumpf-Mantelflächen gebildet sein, wobei die Kontaktstelle im Bereich des größten Durchmessers des Prüfkörpers abgerundet ist.

Dabei kann die Kontaktstelle in Abhängigkeit der zu erwartenden Oberflächenrauheit, dem Weg in Vorschubrichtung des Werkstücks oder des Rauheitsmesseinsatzes, der pro Umdrehung oder Hub zurückgelegt wird der Vorschub, oder der Werkzeuggeometrie, der Werkstückgeometrie und der Werkstofffestigkeit festgelegt sein.

Die Kontaktstelle des Prüfkörpers des multidirektionalen Rauheitsmesseinsatzes kann im Bereich des größten Durchmessers oder Umfangs oder Radius einen Radius von etwa 0,4 mm bis etwa 3 mm, jeweilige Kegelwinkel von etwa 30° bis etwa 70° haben. Dabei gilt, dass am größten Umfang, also am Äquator des Prüfkörpers, dieser keine kreisrunde Gestalt, sondern auch eine elliptische oder sonstige, von der Kreisform abweichende Querschnittsgestalt haben kann.

Die Kontaktstelle des Prüfkörpers des multidirektionalen Rauheitsmesseinsatzes kann im Bereich des größten Durchmessers einen Kantenradius von etwa 5 µm bis etwa 50 µm haben. Dabei kann die Krümmung der Kontaktstelle des Prüfkörpers einen konstanten Wert haben, oder die Krümmung kann sich entlang eines gekrümmten Bereichs der Kontaktstelle des Prüfkörpers verändern. Die letztere Variante erfasst Ausführungen, bei denen die Kante am größten Durchmesser oder am größten Umfang, also am Äquator des Prüfkörpers keine mit einem Radius zu beschreibende Kantenverrundung hat, sondern eine z.B. parabelförmige oder eine Spline-kurvenförmige, oder sonstige Kantenform hat.

Dabei kann bei dem multidirektionaler Rauheitsmesseinsatz die Kontaktstelle des Prüfkörpers eine Doppelkegelgestalt oder Doppelkegelstumpfgestalt mit einem Radius im Bereich des größten Durchmessers von etwa 1,5 mm bis etwa 5 mm oder von etwa 0,4 mm bis etwa 3 mm, einen Kantenradius von etwa 5 µm bis etwa 50 µm und jeweilige Kegelwinkel von etwa 30° bis etwa 130° haben. In einer Variante können die beiden Kegelwinkel etwa 90°, der Radius im Bereich des größten Durchmessers etwa 1,5 mm und der Kantenradius etwa 40 µm betragen. In einer anderen Variante können die beiden Kegelwinkel etwa 120°, der Radius im Bereich des größten Durchmessers etwa 1,1 mm und der Kantenradius etwa 10 µm betragen. In einer weiteren Variante können die beiden Kegelwinkel etwa 60°, der Radius im Bereich des größten Durchmessers etwa 1,5 mm und der Kantenradius etwa 20 µm betragen.

Die Kontaktstelle des Prüfkörpers des multidirektionalen Rauheitsmesseinsatzes kann eine Vorschubrichtung haben, welche zumindest annähernd in Achsrichtung des größten Radius orientiert ist.

Der multidirektionale Rauheitsmesseinsatz kann mit einer mit dem Analogsensor gekoppelten Verarbeitungseinheit ausgestaltet sein, um aus den Mess-Signalen zumindest eine für die Rauheit einer Oberfläche charakteristische Messgröße zu ermitteln, wobei die Verarbeitungseinheit entweder in dem Gehäuse des Rauheitsmesseinsatzes angeordnet ist, oder davon getrennt ist.

Das Messen der Rauheit mit diesem multidirektionalen Rauheitsmesseinsatz hängt stark von der Fähigkeit des Tastkopfs ab, Unebenheiten zu erfassen und dann die Genauigkeit am Berührungspunkt aufrechtzuerhalten. Ein multidirektionaler Rauheitsmesseinsatz der hier beschriebenen Art hat einen Taststift, der eine zu messende Fläche körperlich berührt und einen Messwertwandler zur Wandlung die Bewegung des Taststifts in ein elektrisches Signal, das dann weiterverarbeitet wird. Der Teil des Taststifts, der in Kontakt mit der Oberfläche steht, ist der Tastkopf. Dabei ist der Tastkopf mit einer an die in den Produktionsablauf des Werkstücks integrierte Messaufgabe angepassten Profilform gestaltet. Aufgrund ihrer endlichen Formgebung führen einige Profile des Tastkopfs zu einem größeren Effekt auf bzw. eine bessere Wechselwirkung mit der zu messende Fläche als andere. Die Größe und die Form bzw. das Profil des Taststifts müssen sorgfältig gewählt werden. Diese Merkmale haben einen Einfluss auf die Informationen, die während der Rauheitsmessung gewonnen werden. Stifte und Taster sind schlanke Schäfte mit Kontaktspitzen oder -köpfen, um die Rauheit von Flächen an in einer Werkzeugmaschine im Herstellungsprozess befindlichen Werkstücken zu messen.

Bei hier offenbarten Varianten des multidirektionalen Messtasters hat der Taststift eine zylindrische Stange oder einen schlanken Konus mit einem zur Mittelängsachse des Taststifts rotationssymmetrischen Tastkopf. Ein Stift ist ein schmaler länglicher Schaft ähnlich der Form eines Kugelschreibers. Der Stift kann etwas ballig sein, so dass er leichter gegriffen werden kann. Die Tastköpfe für Rauheitsmessungen bestehen üblicherweise aus Rubin, Hartmetall oder keramischen Werkstoffen. Taststifte oder -köpfe berühren das Werkstück, um Messungen der Rauheit auszuführen. Im Allgemeinen besteht der Tastkopf aus einem einzigen Materialstück, aber einige Taststifte oder -köpfe bestehen aus einem Einsatz aus Rubin oder Diamant, der in den Kopf eingelötet, eingepresst oder eingeklebt ist. Das Material des Tastkopfs kann die Messung beeinflussen. Der Tastkopf kann z. B. ein Al₂O₃ Rubinkörper aus synthetischem monokristallinem Rubin sein, ein Siliziumnitridkörper aus presshartem Si₃N₄, ein Zirkonoxidkörper aus gesintertem ZrO₂, ein Hohlkörper aus weißer Aluminium Al₂O₃ Sinterkeramik, eine Scheibe aus Silberstahl, eine einfache Silberstahlscheibe aus Silberstahl, eine Silberstahlzylinderscheibe aus Silberstahl, eine in einem Rubinkörper endende Zylinderscheibe aus synthetischem Rubin, ein in einer Wolframkarbidscheibe endender Zylinder aus Wolframkarbid, eine Silberstahlscheibe aus Silberstahl mit einem Umfangskantenwinkel von 30° bis 120° mit einer abgerundeten Umfangskante aus Wolframkarbid oder aus anderem Werkstoff sein.

Der Stab oder Schaft kann aus unterschiedlichen Materialien einschließlich nichtmagnetischem, rostfreiem Stahl, Keramik und Kohlefasern sein. Scheibenförmige Tastköpfe sind dünne Abschnitte eines Doppelkegels, die dessen Äquator enthalten.

Ein großer Scheibendurchmesser verringert den Stoß bzw. die Pressung auf die Werkstückoberfläche, deren Rauheit zu prüfen ist. Ein verhältnismäßig schlanker Schaft sorgt für Flexibilität im Zugang zu bestimmten Messstellen.

In einer weiteren Variante kann der multidirektionale Rauheitsmesseinsatz neben einer Rauheitsmessung weiterhin eine Bestimmung einer für die Kontur einer Oberfläche charakteristische Messgröße ermöglichen. Eine solche Variante des Rauheitsmesseinsatzes ermöglicht die Durchführung sowohl einer Konturmessung als auch einer Rauheitsmessung mit demselben Werkzeugeinsatz. Ein Austausch des Werkzeugeinsatzes zur Durchführung der unterschiedlichen Messungen, welcher bei prozessualer Anwendung zusätzliche Zykluszeit beanspruchen würde, ist unter Verwendung einer solchen Variante des Rauheitsmesseinsatzes nicht notwendig.

In einer solchen Variante kann der multidirektionale Rauheitsmesseinsatz einen Taststift mit einem ersten Tastkopf zur Rauheitsmessung und einem zweiten Tastkopf zur Konturmessung aufweisen. Dabei ist der erste Tastkopf, wie den zuvor beschriebenen Varianten des Rauheitsmesseinsatzes entsprechend, zumindest ein Abschnitt eines im Wesentlichen rotationssymmetrischen und im Wesentlichen scheibenförmigen ersten Prüfkörpers. Der zweite Tastkopf kann zumindest ein Abschnitt eines im Wesentlichen kugelförmigen oder ellipsoiden zweiten Prüfkörpers sein. Dabei kann der zweite Tastkopf an einem distalen Ende zumindest eines Abschnitts des Schafts des Taststifts angeordnet sein. In dieser Ausführungsform kann der zweite Prüfkörper im Wesentlichen rotationssymmetrisch zu diesem Abschnitt des Schafts sein. Die Kontaktstelle des zweiten Tastkopfes kann dabei der Mantelfläche des Abschnitts des zweiten Prüfkörpers entsprechen.

In einer ersten Variante können der erste Tastkopf und der zweite Tastkopf an einem distalen Ende zumindest eines Abschnitts des Schafts des Taststifts angeordnet sein. Dabei können der erste Prüfkörper und/oder der zweite Prüfkörper rotationssymmetrisch zu dem Abschnitt des Schafts sein. Alternativ können die Rotationsachsen des ersten Prüfkörpers und/oder des zweiten Prüfkörpers nicht der Rotationsachse des Abschnitts des Schafts entsprechen. Weiterhin kann der Taststift einen Prüfkopf aufweisen umfassend den ersten Tastkopf und den zweiten Tastkopf, wobei der Prüfkopf am distalen Ende eines Abschnitts des Schafts angeordnet sein kann. Dabei kann in einem ersten Bereich des Prüfkopfs der erste Tastkopf und in einem zweiten Bereich des Prüfkopfs der zweite Tastkopf angeordnet sein. Der erste Bereich und der zweite Bereich können an zwei entgegengesetzt angeordneten und/oder angrenzenden Seiten des Prüfkopfs sein. Der Prüfkopf kann dabei einstückig oder mehrstückig bereitgestellt werden.

In einer bevorzugten Ausführungsform hat der Prüfkopf, bis auf den ersten Bereich, in welchem der erste Tastkopf ausgebildet ist, und bis auf einen Bereich, in dem der Prüfkopf mit dem Abschnitt des Schafts in Verbindung steht, eine im Wesentlichen kugelförmige oder ellipsoide Gestalt. Im Bereich des zweiten Tastkopfs entspricht somit die Gestalt des Prüfkopfs der Gestalt des zweiten Prüfkörpers. In dieser Konfiguration kann der Prüfkopf im ersten Bereich einen fehlenden Kugel- bzw. Ellipsoidabschnitt aufweisen, derart, dass eine kugel- bzw. ellipsenförmige Fläche am Prüfkopf ausgebildet ist. Dabei kann der erste Tastkopf mittig und/oder orthogonal aus der kreis- bzw. ellipsenförmigen Fläche herausragen. Alternativ kann der Prüfkopf im ersten Bereich einen Abschnitt in Gestalt eines zylindrischen Körpers aufweisen, an dem der erste Tastkopf bereitgestellt ist. Dabei kann der zylindrische Körper rotationssymmetrisch zum ersten Prüfkörper sein, wobei der Radius des zylindrischen Körpers bevorzugt kleiner ist als der Radius im Bereich des größten Durchmessers des ersten Prüfkörpers.

In einer alternativen Variante kann der Taststift den ersten Tastkopf angeordnet an einem distalen Ende eines ersten Abschnitts des Taststifts und den zweiten Tastkopf angeordnet an einem distalen Ende eines zweiten Abschnitts des Taststifts aufweisen. In einer bevorzugten Ausführungsform, ist der erste Abschnitt aufweisend den ersten Tastkopf als axiale Verlängerung des Schafts des Taststiftes ausgebildet. Der zweite Abschnitt aufweisend den zweiten Tastkopf kann dabei proximal vor dem ersten Abschnitt am Schaft angeordnet sein. Weiterhin kann der zweite Abschnitt orthogonal zum ersten Abschnitt sein. Eine Ausführungsform, in welcher der zweite Tastkopf am distalen Ende des ersten Abschnitts, der in axialer Verlängerung des Schafts ausgebildet ist, und der erste Tastkopf am distalen Ende des zweiten Abschnitts, der orthogonal zum Schaft angeordnet ist, bereitgestellt sind, ist ebenfalls denkbar. Alternativ können der erste Abschnitt und der zweite Abschnitt am distalen Ende des Schafts und orthogonal zu diesem bereitgestellt werden. Dabei können der erste Abschnitt und der zweite Abschnitt an entgegengesetzten Seiten des Schafts bereitgestellt werden. Weiterhin können die Längsachsen des ersten Abschnitts und des zweiten Abschnitts orthogonal oder parallel zueinander sein. Eine Ausführungsform, in der sich die Längsachsen des ersten Abschnitts und des zweiten Abschnitts entsprechen, ist ebenfalls denkbar.

Der multidirektionale Rauheitsmesseinsatz kann durch eine Werkzeugmaschine in einen Messraum relativ zur messenden Oberfläche des Werkstücks bewegt werden. Der berührend funktionierende Rauheitsmesseinsatz detektiert eine Oberfläche des Werkstücks bei Kontakt mit dieser. Für jede detektierte Gestaltabweichung der realen Werkstückoberfläche von ihrer idealen Form gibt der multidirektionale Rauheitsmesseinsatz entsprechende Messdaten an seine Verarbeitungseinheit ab. Die Verarbeitungseinheit kann ein Computerprogramm enthalten. Dort erfolgen durch digitale Filterung die Bestimmung des Welligkeit- und des Rauheitsprofils sowie die Berechnung der Kenngrößen wie arithmetischer Mittenrauwert, quadratischer Mittenrauwert, maximale Einzelrautiefe, Rautiefe, mittlere Glättungstiefe, mittlere Riefentiefe, mittlere Rillenbreite, Wellentiefe, Profiltiefe etc.

Ein (nicht eigenständig beanspruchter) Taststift zum Einsatz in einen multidirektionalen Rauheitsmesseinsatz hat einen stangenförmigen Schaft und einen an dem Schaft angebrachten Tastkopf, wobei der Tastkopf zumindest ein Abschnitt eines zumindest zu einem Abschnitt des stangenförmigen Schafts im Wesentlichen rotationssymmetrischen Prüfkörpers ist, oder der Tastkopf ist zumindest ein Abschnitt eines im Wesentlichen rotationssymmetrischen Prüfkörpers, der an einem distalen Ende zumindest eines Abschnitts des stangenförmigen Schafts angeordnet ist. Der im Wesentlichen rotationssymmetrische Prüfkörper hat eine Doppelkegelgestalt oder Doppelkegelstumpfgestalt. Dabei ist ein Bereich des größten Durchmessers (Äquators) des Prüfkörpers als Kontaktstelle zu einer zu messenden Oberfläche eines Werkstücks ausgebildet, wobei die Kontaktstelle durch zwei Doppelkegel- oder Doppelkegelstumpf-Mantelflächen gebildet ist, und die Kontaktstelle im Bereich des größten Durchmessers des Prüfkörpers abgerundet ist.

Dies ist im Unterschied zu den bei herkömmlichen Rauheitsmessgeräten zu sehen, welche zum Beispiel eine Diamantspitze verwenden, die nach Art einer Plattenspielernadel seitlich an einem Stab befestigt ist.

Messungen mit diesen, nicht normgerechten Tastköpfen mögen im laufenden Produktionsprozess zwar zu nicht normgerechten Messwerten, sondern zu Näherungswerten führen. Diese Näherungswerte können jedoch einfach durch Vergleichsmessungen mit Qualitätssicherungs-Messungen abgeglichen werden. Ein gemäß dem zweiten Aspekt der Erfindung vorgeschlagenes Rauheitsmessverfahren zum Bestimmen einer für die Rauheit einer Oberfläche eines Werkstücks charakteristischen Messgröße verwendet einen Rauheitsmesseinsatz der oben beschriebenen Art. Bei dem Verfahren werden die folgenden Schritte ausgeführt:
Antasten des Tastkopfes an die zu messende Oberfläche, damit der Tastkopf eine vordefinierte Auslenkung aus seiner Ruhelage einnimmt;
Einstellen einer Prüflast durch weiteres Anfahren oder Zurückfahren des Rauheitsmesseinsatzes relativ zur zu messenden Oberfläche, wobei das Einstellen der Prüflast (Anpresskraft des Tastkopfes bezogen auf die Kontaktfläche des Tastkopfes an der zu messenden Oberfläche) in Abhängigkeit von der Gestalt des Tastkopfes und der Gestalt der zu messenden Oberfläche eines Werkstücks erfolgt;
Einschalten einer Betriebsart "Rauheitsmessung", in der nachfolgend erfasste Mess-Signale aufgezeichnet und/oder verarbeitet werden;
Abfahren einer vorgestimmten Mess-Strecke entlang einer vorbestimmten Mess-Richtung; Umsetzen der Bewegungen des Taststiftes in für die Rauheit der Oberfläche charakteristische Mess-Signale und ggf. aufzeichnen und/oder Verarbeiten der Mess-Signale; Auswerten der Mess-Signale, um wenigstens eine für die Rauheit einer Oberfläche charakteristischen Messgröße zu bestimmen; und
Aussenden der wenigstens einen bestimmten Messgröße an eine Maschinensteuerung.

Bei diesem Rauheitsmessverfahren kann der Schritt des Antastens des Tastkopfes an die zu messende Oberfläche durch Anfahren des Rauheitsmesseinsatzes in einer Werkzeugmaschine relativ zur zu messenden Oberfläche eines Werkstücks erfolgen.

Dabei kann der Schritt des Abfahrens einer vorgestimmten Mess-Strecke entlang einer vorbestimmten Mess-Richtung entweder ein Vorgeben einer von dem Tastkopf zu überstreichenden Weg-Distanz oder ein Vorgeben einer Zeitdauer, während der der Tastkopf die Mess-Strecke zurücklegt, umfassen, und die vorbestimmte Mess-Richtung kann eine beliebig zu wählende Richtung entlang der zu messenden Oberfläche umfassen.
Der Schritt des Auswertens der Mess-Signale - in einem Prozessor in dem Rauheitsmesseinsatz oder nachgelagert - kann ein Speichern und Verknüpfen der mittels des Analogsensors aufgenommenen Mess-Signale zu wenigstens einem der für die Rauheit der Oberfläche charakteristischen Messgrößen: arithmetischer Mittenrauwert, gemittelte Rautiefe, quadratischer Mittenrauwert, maximale Einzelrautiefe, Rautiefe, mittlere Glättungstiefe, mittlere Riefentiefe, mittlere Rillenbreite, Wellentiefe, Profiltiefe umfassen. Weiter können Informationen über Gestaltabweichungen 1. u. 2. Ordnung geliefert werden.

Der Schritt des Auswertens der mittels des Analogsensors aufgenommenen Mess-Signale umfasst auch ein Verarbeiten der Mess-Signale mittels eines Profilfilters, da die Welligkeit sonst die Rauheit zu sehr verfälscht. Ein Profilfilter, z.B.. ein digitaler phasenkorrekter Gaußfilter trennt das ungefilterte Primärprofil (P-Profil) in Rauheit (R-Profil) und Welligkeit

(W-Profil) auf. Dabei ist das Rauheitsprofil die Abweichung des Primärprofils von der Welligkeit (R = P-W). Die Bezugslinie bzw. Mittellinie im Rauheitsprofil ist die Linie, die den langwelligen Profilanteilen entspricht, die durch den Gaußfilter ermittelt und unterdrückt werden. Bei Verwendung des Gaußfilters werden die Verzeichnungen des Profils in senkrechter Richtung, bedingt durch plötzliche Änderung der Profilhöhe, verringert. Die Phasenverschiebung in waagrechter Richtung entfällt ganz. Zur Bestimmung der mittleren Linie wird mit Hilfe des Gaußfilters an jedem Punkt das gewichtete arithmetische Mittel der Ordinatenhöhen berechnet. Damit Punkte am Beginn und Ende der Messstrecke ebenfalls richtig gewichtet werden können, muss zum Ein- und Ausschwingen des Filters die Taststrecke länger als die Gesamtmessstrecke sein Üblich sind Vor- und Nachlaufstrecken von je der halben Grenzwellenlänge.

Die Grenzwellenlänge eines Profilfilters ist diejenige Wellenlänge, bei welcher der Filter die Amplitude einer Sinuswelle auf die Hälfte reduziert. Sie kann somit als Maß für die Grenze zwischen Rauheit und Welligkeit verstanden werden. Die Grenzwellenlänge definiert den Übergang der Rauheit zu noch kürzeren Wellenlängen und die Grenzwellenlänge grenzt die Welligkeit gegenüber längeren Wellenlängen ab. Die Grenzwellenlängen sind bei periodischen Profilen nach der mittleren Rillenbreite und bei aperiodischen Profilen nach dem zu messenden Rauheitswert zu wählen. Die Gesamtmessstrecke einer Messung ist stets das Fünffache der Grenzwellenlänge. Die Taststrecke ist das Sechsfache. Mit abnehmender Grenzwellenlänge nehmen die Amplitude des gefilterten Rauheitsprofils ab und die des Welligkeitsprofils zu. Somit werden bei kürzeren Grenzwellenlängen auch kleinere Rauheitswerte gemessen.

Rauheitsparameter werden aus dem gefilterten Profil berechnet. Deswegen ist die verwendete Grenzwellenlänge relevant, insbesondere bei Vergleichsmessungen. Das Primärprofil, die Welligkeit und die Rauheit werden unterschieden. Der Wert einer Profilkenngröße ergibt sich durch Mittelung der Einzelergebnisse von direkt hintereinander liegenden Einzelmessstrecken.
Der arithmetische Mittenrauwert ist das arithmetische Mittel der Beträge der Ordinatenwerte des Rauheitsprofils innerhalb der Einzelmessstrecke. Er stellt die mittlere Abweichung des Profils von der mittleren Linie dar.
Der Mittenrauwert kann nicht zwischen Spitzen und Riefen unterscheiden, ebenso wenig kann er verschiedene Profilformen erkennen. Seine Definition beruht auf einer starken Mittelwertbildung.
Der quadratische Mittenrauwert ist der quadratische Mittelwert der Profilabweichung. Er ist ähnlich definiert wie der Mittenrauwert, reagiert aber empfindlicher auf einzelne Spitzen und Riefen.

Die gemittelte Rautiefe ist die Summe aus der Höhe der größten Profilspitze und der Tiefe des größten Profiltals innerhalb einer Einzelmessstrecke. Üblicherweise ergibt sich gemittelte Rautiefe aus Mittelung der Ergebnisse von fünf Einzelmessstrecken. Insgesamt reagiert gemittelte Rautiefe empfindlicher auf die Veränderung von Oberflächenstrukturen als Mittenrauwert.
Die maximale Einzelrautiefe ist die größte Einzelrautiefe.
Die Rautiefe ist die vertikale Differenz der tiefsten Riefe und der höchsten Spitze innerhalb der Gesamtmessstrecke.
Die folgenden Rauheitsparameter helfen bei der "horizontalen" Charakterisierung eines Profils.
Die Definition der mittleren Glättungstiefe ist nahezu identisch mit der gemittelten Rautiefe. Das gefilterte Profil wird in fünf gleiche Stecken unterteilt, die der Grenzwellenlänge entsprechen. Im Gegensatz zur Bestimmung der gemittelten Rautiefe wird hier in jedem Segment der Abstand von der Mittellinie bis zur höchsten Spitze entnommen. Die gemittelte Glättungstiefe ist das arithmetische Mittel dieser fünf Werte.
Die mittlere Riefentiefe wird analog zu mittleren Glättungstiefe gebildet. Anstatt den Spitzenhöhen werden die Riefentiefen verwendet.
Bei Lagerflächen dienen Riefen beispielsweise als Schmierstofftaschen. Spitzen sind wiederum nicht erwünscht, da sie die Reibung und den Verschleiß erhöhen würden. Bei Pressverbänden wird ebenfalls häufig mit der mittleren Glättungstiefe gearbeitet, da Pressverbände eine möglichst große Berührungsfläche benötigen.
Die mittlere Rillenbreite ist der arithmetische Mittelwert der Breiten der Profilelemente des Rauheitsprofils innerhalb einer Einzelmessstrecke. Hierbei ist ein Profilelement eine Profilerhebung mit einer benachbarten Vertiefung. Dabei ergibt sich die mittlere Rillenbreite aus Mittelung der Ergebnisse von fünf Einzelmessstrecken. Sie wird bei periodischen Profilen zur Auswahl der Grenzwellenlänge des Filters herangezogen.
Die Wellentiefe zeigt die maximale Tiefe des gefilterten Profils, nachdem die Rauheit ausgefiltert wurde.
Die Profiltiefe ist der Abstand zweier paralleler Linien, die das ungefilterte Oberflächenprofil einschießen. Die Linien haben die Form des idealen Profils (z.B. Gerade, Kreis).
Das hier beschriebene Rauheitsmessverfahren zeichnet sich auch dadurch aus, dass die obigen Verfahrens-Schritte in einer Werkzeugmaschine ausgeführt werden, wobei der Rauheitsmesseinsatz anstelle eines Werkzeugs in einer Spindel der Werkzeugmaschine eingesetzt wird und die Mess-Signale und oder die Messgröße an eine Maschinensteuerung der Werkzeugmaschine ausgegeben werden.

Dabei können die Verfahrens- Schritte nach und/oder vor Bearbeitungsschritten mittels wenigstens eines Werkzeuges an dem Werkstück in der Werkzeugmaschine ausgeführt werden.

Der multidirektionale Rauheitsmesseinsatz kann im Schritt des Abfahrens einer vorgestimmten Mess-Strecke entlang einer vorbestimmten Mess-Richtung so orientiert sein, dass die Kontaktstelle des Prüfkörpers eine Vorschubrichtung hat, welche zumindest annähernd in Achsrichtung des größeren Radius des Prüfkörpers orientiert ist, und die Tangentenrichtung des größeren Radius zumindest annähernd parallel zu einer zu messenden Rillenrichtung des Werkstückes ausgerichtet ist.

Die hier vorgestellten Rauheitsmesseinsätze bieten folgende Vorteile:
(a) Minimierung von Ausschuss durch direkte Überwachung des Fertigungsprozesses
(b) Dreh- und Fräswerkzeuge können ohne Abstriche bei der Oberflächenrauheit bis an ihre Verschleißgrenze gefahren werden
(c) Höhere Produktivität und Prozess-Sicherheit durch Wegfall von manuellen und nachgelagerten Prüfungen

Die hier vorgestellten Rauheitsmesseinsätze zur Messung von Werkstückoberflächen können direkt in den Zerspanungsprozess integriert werden. Durch die prozessintegrierte Überwachung der Werkstückoberflächen sind die Fertigungsprozesse wesentlich effizienter als bisher.

Eine mögliche Reduzierung der Stillstandzeiten der Werkzeugmaschine wird erreicht durch Eliminierung langwieriger manueller Rauheitsmessungen. Die Kosten für Ausschuss durch sofortige Nacharbeit sind minimiert. Werkzeuge können bis an ihre Verschleißgrenze gefahren werden und müssen nicht präventiv getauscht werden.

### Kurzbeschreibung der Zeichnungen

In den Zeichnungen sind Ausführungsformen und Abwandlungen des multidirektionalen Rauheitsmesseinsatzes mit dem Taststift mit einem zur Mittelängsachse des Taststifts rotationssymmetrischen Tastkopf dargestellt.
Fig. 1 und Fig. 2 zeigen eine schematische seitliche Schnittdarstellung eines multidirektionalen Rauheitsmesseinsatzes in Ruhelage (Fig. 1) bzw. in ausgelenkter Stellung (Fig. 2).
Fig. 3 veranschaulicht eine Messung der Rauheit mit einem multidirektionalen Rauheitsmesseinsatz in einem Werkstück.
Fig. 4 veranschaulicht eine Messung der Rauheit mit einem multidirektionalen Rauheitsmesseinsatz an einer Oberfläche eines Werkstücks.
Fig. 5a und 5a zeigen Varianten des multidirektionalen Rauheitsmesseinsatzes, bei denen der stangenförmige Schaft durch ein Koppelelement abgewinkelt mit dem Übertragungsglied gekoppelt ist.
Fig. 6 bis 10 zeigen Varianten von Tastköpfen für Rauheitsmesseinsätze mit unterschiedlichen Gestalten und Abmessungen.
Fig. 11 zeigt eine weitere Variante eines Rauheitsmesseinsatzes in einer teilweise aufgeschnittenen, seitlichen schematischen Darstellung.
Fig. 12a bis 12c und 13a bis 13c zeigen weitere Varianten von Taststiften für Rauheitsmesseinsätze mit zwei Tastköpfen zur Durchführung von Rauheits- und Konturmessungen.
Fig. 14a bis 14c veranschaulichen weitere Varianten eines Rauheitsmesseinsatzes, bei denen zwei Tastköpfe zur Durchführung von Rauheits- und Konturmessungen an unterschiedlichen Abschnitten eines Taststiftes angeordnet sind.

### Detaillierte Beschreibung der Zeichnungen

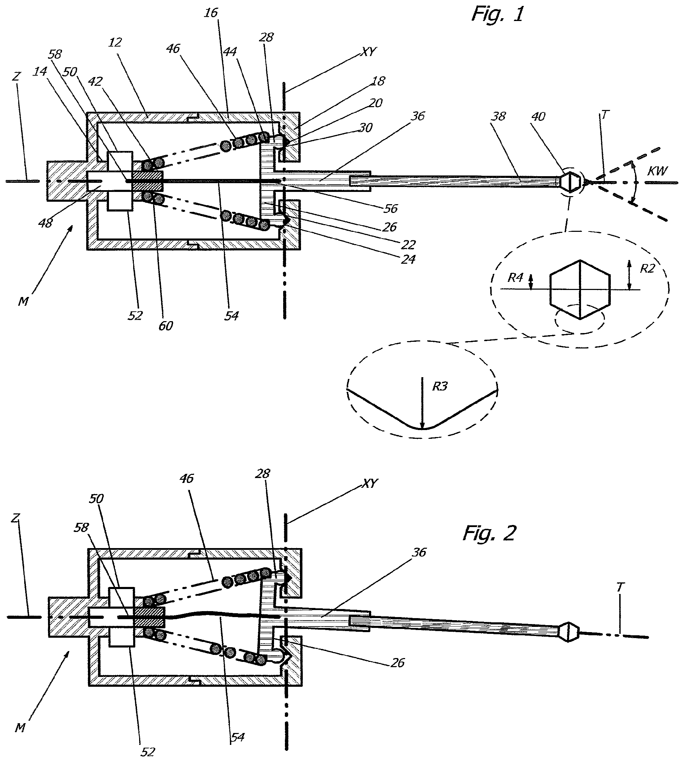

Der in Fig. 1 und Fig. 2 in Ruhelage bzw. in ausgelenkter Stellung dargestellte multidirektionale Rauheitsmesseinsatz M hat ein im wesentlichen zylindrisches Gehäuse, das aus einem proximalen, in den Zeichnungen oberen Gehäuseteil 12 mit einem Ansatz 14 einerseits und einem distalen, in den Zeichnungen unteren Gehäuseteil 16 mit einem radial nach innen ragenden Gehäuseflansch 18 andererseits zusammengesetzt ist.

Die beiden Gehäuseteile 12 und 16 des Rauheitsmesseinsatzes M sind miteinander dicht und fest verbunden, beispielsweise unmittelbar miteinander verschraubt. An der proximalen, in den Zeichnungen oberen Seite des radial nach innen ragenden Gehäuseflansches 18 ist ein ringförmiges Stützlager 20 in Form einer Ringrille ausgebildet, das eine radial innere, konvexe Kegelstumpffläche 22 und eine radial äußere, konkave Kegelstumpffläche 24 aufweist; diese beiden Kegelstumpfflächen sind bei den dargestellten Messtastern im axialen Querschnitt ungefähr rechtwinklig zueinander angeordnet. In einer Variante ist die radial äußere, konkave Kegelstumpffläche 24 steiler, beispielsweise um 75° gegen die Ebene der distalen Stirnfläche des Gehäuseflansches 18 geneigt. In jedem Fall ist es zweckmäßig, wenn die Kegelstumpfflächen 22 und 24 mit reibungsminderndem Material beschichtet oder daraus hergestellt sind.

Innerhalb des distalen Gehäuseteils 16 des Rauheitsmesseinsatzes M ist ein pilzförmiger Tragkörper 26 angeordnet, an dem ein ringförmiges Gegenlager 28 ausgebildet ist. Das Gegenlager 28 hat einen ungefähr halbkreisförmigen oder aus mehreren Bogenabschnitten mit unterschiedlichen Radien zusammengesetzten Querschnitt und lässt sich in jedem Fall als Ringwulst bezeichnen. Der Tragkörper 26 nimmt in Fig. 1 eine Ruhelage ein, in der das Gegenlager 28 das Stützlager 20 längs einer ebenen kreisförmigen Berührungslinie 30 - und sonst nirgends - berührt. Diese kreisförmige Berührungslinie liegt auf der konvexen, radial inneren Kegelstumpffläche 22 des ringförmigen Stützlagers 20. Von der konkaven, radial äußeren Kegelstumpffläche 24 des Stützlagers hat das ringförmige Gegenlager 28 hingegen einen minimalen Abstand von vorzugsweise einigen wenigen µm (2 - 10µm), solange der Tragkörper 26 seine Ruhelage einnimmt. Dieser Abstand kann dabei an einer Stelle auf den Betrag Null abnehmen, d. h. dass der Tragkörper 26 eine leicht exzentrische Ruhelage einnimmt, in der das Gegenlager 28 die radial äußere, konkave Kegelstumpffläche 24 des Stützlagers 20 an einem Punkt berührt. Die Ebene der Berührungslinie 30 wird im Folgenden als Lagerebene X, Y bezeichnet; orthonormal, also rechtwinklig dazu, erstreckt sich die im Folgenden als zentrale Achse Z bezeichnete Achse des Messtasters M, d. h. seines Gehäuses 12, 14. Der Tragkörper 26 hat eine eigene Längsachse T, die in Ruhelage sowie bei rein axialer Auslenkung des Tragkörpers 26 mit der zentralen Achse Z praktisch übereinstimmt.

Wenn der Tragkörper 26 des Rauheitsmesseinsatzes M durch Kippen aus seiner Ruhelage ausgelenkt wird, wie dies z. B. in Fig. 2 dargestellt ist, so berührt das ringförmige Gegenlager 28 die radial innere, konvexe Kegelstumpffläche 22 des ringförmigen Stützlagers 20 nur noch in einem radial inneren Berührungspunkt 32. Zusätzlich berührt das Gegenlager 28 die radial äußere, konkave Kegelstumpffläche 24 des Stützlagers 20 in einem radial äußeren Berührungspunkt 34 .

Der Tragkörper 26 des Rauheitsmesseinsatzes M ist mit einer zentralen Taststiftaufnahme 36 ausgestattet, die sich in distaler Richtung entlang der Längsachse T erstreckt und in Richtung der Längsachse T am Tragkörper 26 des Rauheitsmesseinsatzes M verschiebbar ist. Die Taststiftaufnahme 36 ist dazu bestimmt, einen auswechselbaren Taststift 38 aufzunehmen, der einen Tastkopf 40 trägt.

Bei dem in Fig. 1 und 2 dargestellten Rauheitsmesseinsatz M ist jeweils am distalen Ende des Ansatzes 14, innerhalb des proximalen Gehäuseteils 12, ein bezüglich der zentralen Achse Z konzentrischer kreisringförmiger Federsitz 42 ausgebildet, und diesem steht ein ebenfalls kreisringförmiger Federsitz 44 gegenüber, der an der proximalen Seite des Tragkörpers 26 konzentrisch zu dessen Längsachse T ausgebildet ist. Zwischen diesen beiden Federsitzen 42 und 44 ist eine kegelstumpfförmig gewendelte Schraubenfeder 46 eingespannt, die ständig bestrebt ist, den Tragkörper 26 in seiner Ruhelage zu halten.

Der Ansatz 14 des proximalen Gehäuseteils 14 hat eine vom Inneren des Gehäuses 10 ausgehende axiale, also zur zentralen Achse Z konzentrische Bohrung 48, in die radial ein analoger Sensor 50, und diesem diametral gegenüber, ein Emitter 52 für einen Mess-Strahl hineinragen. In den dargestellten Beispielen ist der Emitter 52 eine Lichtquelle, die zusammen mit dem Sensor 50 zum Beispiel einem PSD (Engl. position sensitive detector) eine Miniaturlichtschranke mit analogem Ausgangssignal bildet. Diese PSD Bauelemente nutzen den Effekt der lateralen Aufteilung des generierten Fotostromes. Ein PSD bezeichnet ein Bauelement, das auf der Silizium PIN Diodentechnologie beruht und mit dem die Messung der Position des integralen Schwerpunktes eines auftreffenden Lichtsignales ermöglicht wird. Ein PSD konvertiert die Energie eines zum Beispiel darauf abgebildeten Lichtspots in ein kontinuierliches der Position des Schwerpunktes dieses Spots entsprechenden elektrischen Signals. Die Position einer Richtung wird aus dem Verhältnis zweier Ausgangsströme gewonnen. Es sind aber auch andere Sensoranordnungen einsetzbar.

Jegliche Auslenkung des Tastkopfes 40, und somit auch der Taststiftaufnahme 36, aus ihrer Ruhelage wird dem Sensor 50 durch ein Übertragungsglied 54 mitgeteilt, das ein schlanker, gerader Biegestab ist und vorzugsweise aus gezogenem Federstahldraht von kreisförmigem Querschnitt mit einem Durchmesser von 0,5 bis 1,2 mm besteht. Dadurch wird der Mess-Strahl aus dem Emitter 52 gegenüber der Ruhelage weiter oder weniger weit abgeschattet, wie dies in Fig. 2 veranschaulicht ist. Dies wird in einer nicht weiter veranschaulichten Elektronik ausgewertet. Für den Rauheitsmesseinsatz M hat sich vor allem ein Federstahldraht von 0,8 mm Durchmesser bewährt; für besonders kleine Rauheitsmesseinsätze M kommt aber auch Federstahldraht erheblich kleineren Durchmessers von beispielsweise 0,2 mm in Frage.

Das Übertragungsglied 54 erstreckt sich in Ruhelage geradlinig längs der zentralen Achse Z des Rauheitsmesseinsatzes M; sein distales Ende 56 ist zentral an der Taststiftaufnahme 36 befestigt. Nahe seinem proximalen Ende 58 ist das Übertragungsglied 54 in einer Führungsbuchse 60 geführt. Die Führungsbuchse 60 kann aus gegenüber dem Material des Übertragungsgliedes 54 - gezogenem Federstahldraht - reibungsarmem Werkstoff, wie z. B. Polyamid oder Sinterbronze bestehen. Besonders bewährt hat sich jedoch eine Alternative, bei der die Führungsbuchse 60 eine handelsübliche gehärtete Bohrbuchse mit geschliffener Bohrung ist. In diesem Fall ist das Übertragungsglied 54 in dem an sein proximales Ende 58 angrenzenden Abschnitt mit reibungsminderndem Material beschichtet.

In Ruhelage ragt das proximale Ende 58 des Übertragungsgliedes 54 über das proximale Ende der Führungsbuchse 60 hinaus und reicht bis in die Mitte des vom Emitter 52 in Richtung zum Sensor 50 ausgesandten Lichtstrahls.

Das Übertragungsglied 54 ist hier ein Federstahldraht, dessen zum Biegen nutzbare Länge mit dem Abstand zwischen dem distalen, in den Zeichnungen also unteren Ende der Führungsbuchse 60 und der proximalen, also oberen Stirnfläche des Tragkörpers 26 übereinstimmt. Anstatt des Federstahldrahtes kann auch ein starrer Stift eingesetzt werden, welcher pendelnd gelagert ist.

Das am distalen Gehäuseteil 16 ausgebildete ringförmige Stützlager 20 und das am Tragkörper 26 ausgebildete ringförmige Gegenlager 28 ist in einer Variante von je einer Planverzahnung gebildet. Dadurch ist der Tragkörper 26 in seiner Ruhelage sowie bei allen radialen Auslenkungen des von ihm getragenen Tastkopfes 40 daran gehindert, sich um seine Längsachse T zu drehen. Eine der beiden miteinander zusammenwirkenden Verzahnungen ist in einer Variante bogenförmig abgerundet. Damit können die Verzahnungen sich beim Kippen des Tragkörpers 26 aneinander abwälzen.

Das in Fig. 1 gezeigte stiftförmige Bauteil, ein Taststift, hat einen stangenförmigen Schaft oder Stift 38 und einen an dem Stift 38 angebrachten Tastkopf 40. Der stangenförmige Schaft 38 ist in dieser Variante aus Hartmetall gefertigt. Es ist natürlich möglich, unterschiedliche Werkstoffe für den stangenförmigen Schaft 38 und den Tastkopf 40 zu verwenden. Der Tastkopf 40 hat eine doppelkegelige Gestalt und kann aus Rubin oder Diamant gefertigt sein, die an den stangenförmigen Schaft 38 angeklebt sind. Der Tastkopf 40 kann z. B. eine Al₂O₃ Rubin-Doppelkegel aus synthetischem monokristallinem Rubin sein, ein Doppelkegel aus Siliziumnitrid aus presshartem Si₃N₄, ein Doppelkegel aus Zirkonoxid aus gesintertem ZrO₂, ein hohler Doppelkegel aus Aluminium aus weißer Aluminium Al₂O₃ Sinterkeramik, ein Doppelkegel aus Wolframkarbid oder ein Doppelkegel aus einem anderem harten Werkstoff sein.

Der Doppelkegel-Tastkopf 40 ist einstückig, kann aber als aus zwei symmetrischen Kegelstümpfen gebildet gedacht sein, mit einem kleinen Radius R4 an beiden Enden des Tastkopfs 40 und einen größten Radius R2 am Äquator des Tastkopfs 40. Da das stiftförmige Bauteil der Figur 1 generell symmetrisch ist, ist der kleine Radius R4 am proximalen Abschnitt PP des Tastkopfs 40 identisch mit dem kleinen Radius R4 am distalen Abschnitt DP des Tastkopfs 40. Da die beiden Deckflächen des Doppelkegel-Tastkopfes 40 parallel zueinander orientiert sind, hat der Tastkopf 40 generell eine Tonnen- oder Scheibenform. Bei dem stiftförmigen Bauteil der Figur 1 hat der Tastkopf 40 ein Verhältnis des kleinen Radius R4 zum Radius R2 am Äquator von 0,5 bis 1. Im Bereich des Äquators ist die ringförmige Kante mit einem Radius R3 verrundet.

Bei dem stiftförmigen Bauteil nach Figur 1 hat der Doppelkegel-Tastkopf 40 einen Kegelwinkel KW von etwa 55°.

Der Tastkopf 40 kann auch generell eine asymmetrische Doppelkegelgestalt haben. Das bedeutet, dass sich der Äquator (d.h. der Abschnitt des größten Durchmessers-oder Radius des Tastkopfs 40) nicht in der Mitte des Doppelkegels befindet.

Die Messkraft eines hier vorgestellten Rauheitsmesseinsatzes liegt in der Regel höher als die eines herkömmlichen Tastschnittgerätes. Um die Belastung auf der Werkstückoberfläche in akzeptierbaren Grenzen zu halten, wird anstatt des üblichen Prüfkegels mit gerundeter Spitze einen scheibenförmigen Prüfkörper verwendet. In Abhängigkeit der zu erwartenden Oberflächenrauheit, Vorschub, Werkzeuggeometrie, der Werkstückgeometrie und der Werkstofffestigkeit ist eine für die Messaufgabe optimale Prüfkörpergeometrie definiert.

Dazu sei die Hertzsche Pressung pH gegen ebene Stahloberfläche betrachtet:
In einem Standard-Tastschnittgerät, HOMMEL-ETAMIC, ergibt sich bei einer R5 µm-Spitze, einer Anpresskraft von F=1,6 mN eine Hertzsche Pressung pH=6800 MPa und eine Druckellipse von 0,3 µm x 0,3 µm.

Demgegenüber liefert eine Anordnung des hier vorgestellten Rauheitsmesseinsatzes mit einer Scheibe mit einem größten Durchmesser am Äquator 03mm einem Kantenadius von R=10µm, einer Anpresskraft von F=0,36 N eine Hertzsche Pressung pH=7840 MPa und eine Druckellipse von 1,0 µm x 23 µm.

Weitere Beispiele des hier vorgestellten Rauheitsmesseinsatzes sind:
Scheibe Ø3-R=20µm, F=0,36 N: pH=5670 MPa, Druckellipse: 1,4 µm x 22 µm
Scheibe Ø3-R=40µm, F=0,36 N: pH=4110 MPa, Druckellipse: 2,0 µm x 21 µm

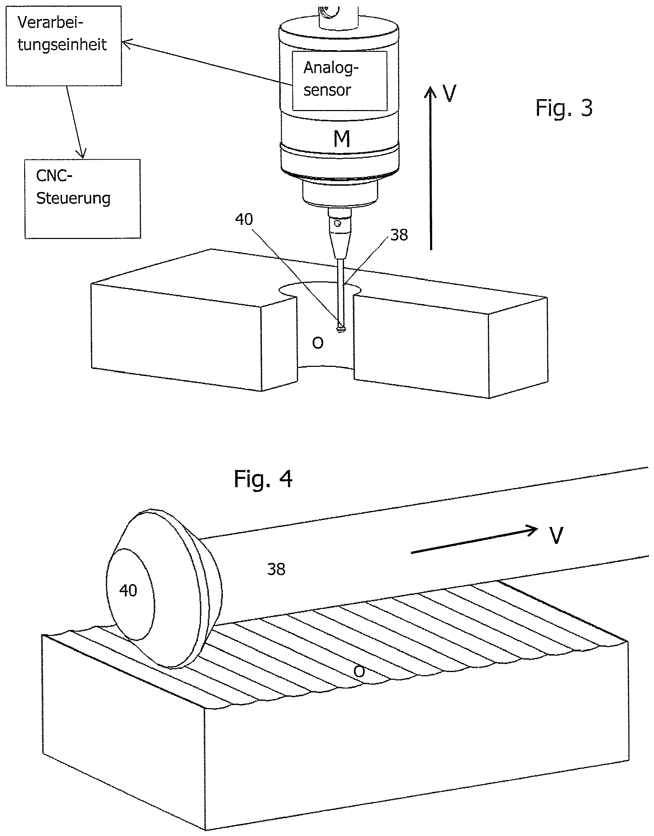

Die Vorschubrichtung V ist beim hier vorgestellten Rauheitsmesseinsatz generell in Achsrichtung des größten Radius. Die Tangentenrichtung des größten Radius ist in den Beispielen parallel zur Rillenrichtung des Werkstückes ausgerichtet. Bei dieser Anordnung kann die Umfangslinie des Prüfkörpers oder Tastkopfes 40 das Tal der Bearbeitungsrillen (siehe z.B. Fig. 4) erreichen.

Fig. 3 veranschaulicht, wie der multidirektionale Rauheitsmesseinsatz M zur Messung der Rauheit in einer Bohrung in einem Werkstück O einzusetzen ist.

Fig. 4 veranschaulicht, wie der multidirektionale Rauheitsmesseinsatz M zur Messung der Rauheit in einer Oberfläche an einem Werkstück O einzusetzen ist.

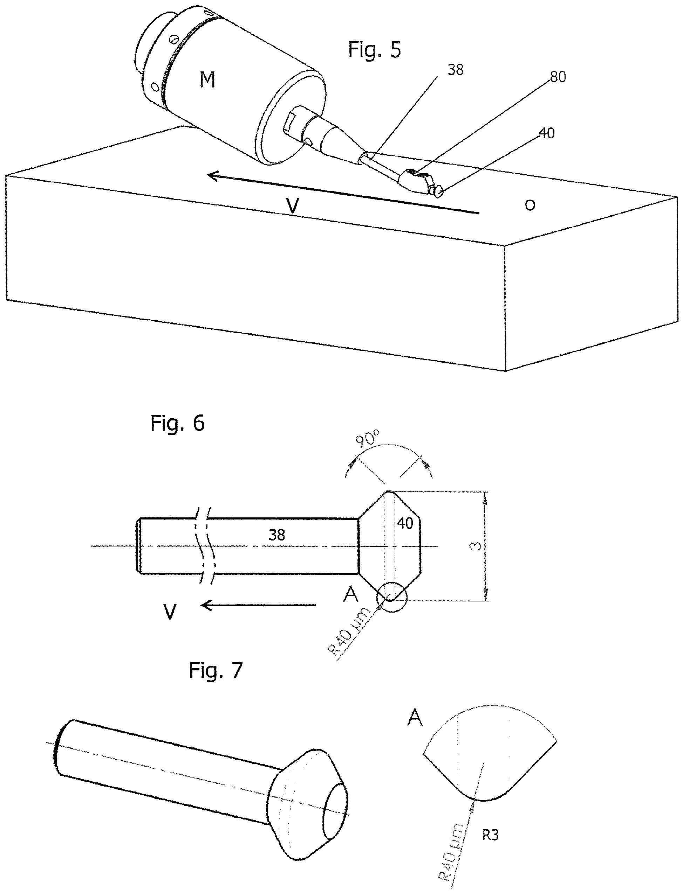

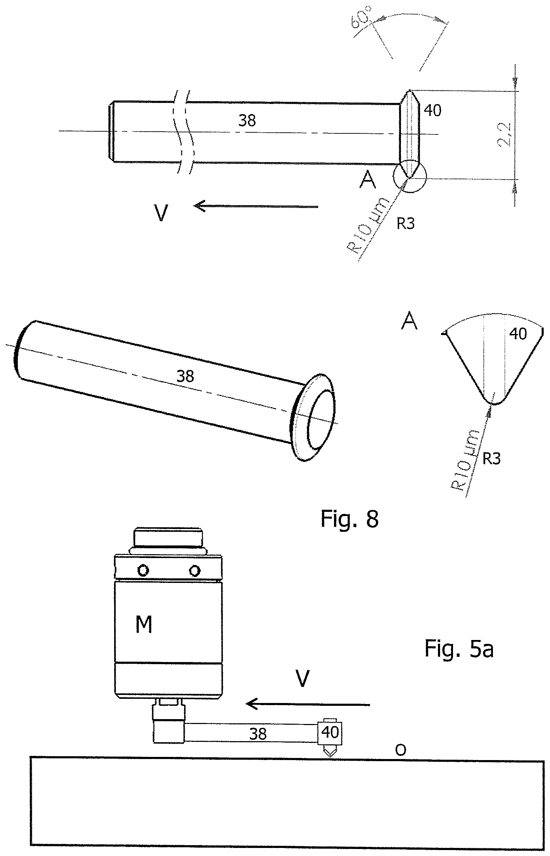

Bei dem multidirektionalen Rauheitsmesseinsatz M in der in Fig. 5 gezeigten Variante ist der stangenförmige Schaft 38 durch ein Koppelelement etwa 25° abgewinkelt mit dem Übertragungsglied gekoppelt ist. Ist eine Oberfläche eines Werkstücks mit einer solchen Anordnung nicht erreichbar, ist auch eine Abwinklung des Schaftes um etwa 90° möglich (siehe Fig. 5a).

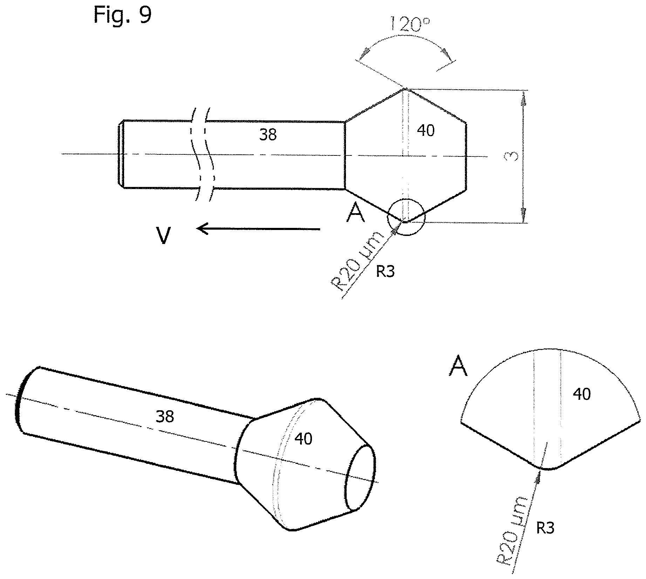

Die Fig. 6 bis 10 zeigen Varianten von Tastköpfen 40 mit unterschiedlichen Gestalten und Abmessungen.

In den Fig. 3 bis 9 hat die Kontaktstelle des Prüfkörpers eine Doppelkegelgestalt oder Doppelkegelstumpfgestalt mit einem Radius im Bereich des größten Durchmessers von etwa 0,4 mm bis etwa 3 mm, einen Kantenradius von etwa 5 µm bis etwa 50 µm und der jeweilige Kegelwinkel hat etwa 30° bis etwa 130°.

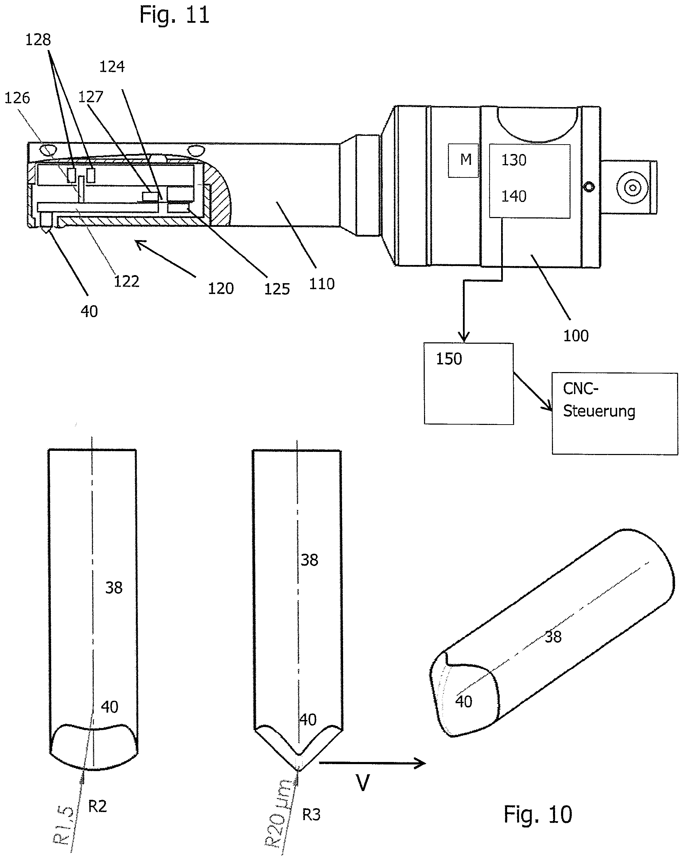

Dabei zeigt insbesondere Fig. 10 eine Anordnung, bei der der Tastkopf 40 in axialer Verlängerung des stangenförmige Schafts 38 ausgebildet ist. Auch hier ist eine Vorschubrichtung V normal zum größten Radius vorgesehen.

In einer Variante können die beiden Kegelwinkel etwa 90°, der Radius im Bereich des größten Durchmessers etwa 1,5 mm und der Kantenradius etwa 40 µm betragen. In einer anderen Variante können die beiden Kegelwinkel etwa 120°, der Radius im Bereich des größten Durchmessers etwa 1,1 mm und der Kantenradius etwa 10 µm betragen. In einer weiteren Variante können die beiden Kegelwinkel etwa 60°, der Radius im Bereich des größten Durchmessers etwa 1,5 mm und der Kantenradius etwa 20 µm betragen.

In den Fig. ist die Vorschubrichtung jeweils in eine Richtung angegeben. Es ist jedoch auch möglich, zur Rauheitsmessung die hier vorgestellten Rauheitsmesseinsätze in die entgegengesetzte Richtung zu bewegen.

In Fig. 11 ist eine weitere Variante eines Rauheitsmesseinsatzes veranschaulicht. Hierbei ist das Messwerk so modifiziert und vereinfacht, dass es nur entlang einer Achse A zur Rauheitsmessung einzusetzen ist.

Dieser Rauheitsmesseinsatz hat ein Gehäuse 100, aus dem eine schlanke Sensoraufnahme 110 mit einem unidirektional auslenkbaren analogen Messmodul 120 ragt. In dem Gehäuse 100 ist eine Verarbeitungseinheit mit einer Auswerteelektronik 130 untergebracht für die durch das Messmodul erfassten, die Rauheit einer Oberfläche eines Werkstücks charakterisierenden Mess-Signale. Außerdem ist in dem Gehäuse 100 ein drahtloses Infrarot- oder Funkmodul 140 zur Datenübertragung der ermittelten Rauheitsdaten an eine CNC-Steuerung oder eine der CNC-Steuerung vorgelagerte Schnittstelle.

Das unidirektional auslenkbare analoge Messmodul 120 hat einen Schwenkarm 122, der über ein Federgelenk 124 in Gestalt einer im Wesentlichen rechteckigen Federplatte in dem Schaft mit einem Schwenkweg von etwa plus/minus 0,15 - 0,35, z. B. 0,25 mm aufgenommen ist. Außerdem sichert das Federgelenk 124 in Gestalt einer Blattfeder, dass der Schwenkarm nicht seitlich auswandern kann. Dazu ist die eine Seite der Federplatte mit zwei Schrauben 125 an einer Sensorbasis befestigt, die ihrerseits in der schlanken Sensoraufnahme 110 befestigt ist. Die andere Seite der Federplatte ist mit zwei Schrauben an dem Schwenkarm 122 verschraubt. An dem Schwenkarm 122 ist ein Zapfen 126 angeordnet, der in einen Mess-Strahl einer Lichtschranke 128 hineinragt und diesen, abhängig vom Grad der Auslenkung des Schwenkarms, mehr oder weniger abschattet. Die Grundstellung des Zapfens 126 in der Ruhelage des Schwenkarms 122 ist durch eine Schraube 127 einstellbar, welche die Winkellage des Schwenkarms 122 in der Ruhelage gegenüber der schlanken Sensoraufnahme 110 festlegt. Im Bereich des freien Endes des Schwenkarms 122 befindet sich ein Tastkopf 40 der oben beschriebenen Art, insbesondere der Fig. 10, aber auch eine der anderen Varianten ist möglich, der mit einer Oberfläche eines Werkstücks in Kontakt zu bringen ist, um deren Rauheit zu messen. Dazu wird der Rauheitsmesseinsatz in die Spindel einer Werkzeugmaschine eingesetzt und, gesteuert von der CNC-Steuerung der Werkzeugmaschine, über die Oberfläche des Werkstücks verfahren. Dieser Rauheitsmesseinsatz kann radial oder axial an der Spindel der Werkzeugmaschine angeflanscht werden.

Neben der Ausgabe der Rauheitsmesswerte an die Maschinensteuerung stellt die der CNC-Steuerung vorgelagerte Schnittstelle 150 die Ergebnisse grafisch dar. Dies kann zur Protokollierung und Auswertung genutzt werden. Als nicht in Ordnung zu bewertende Oberflächen können somit prozessnah erkannt werden. Durch die Messung in der Originalaufspannung in der Werkzeugmaschine besteht die einfache Möglichkeit der Nacharbeit. So kann ein durch Oberflächenrauheit bedingter Ausschuss an Werkstücken auf ein Minimum reduziert werden.

Das Messmodul kann mit dieser Ausgestaltung eine Messkraft von ca. 50 mN erreichen. Dies wird durch die geringe Federkraft und die geringen bewegten Massen erzielt. Mit gegenüber dem multidirektionalen Messwerk geringeren Messkräften kann auch der Tastkopf mit kleineren Radien gestaltet werden, ohne dass die Hertzsche Pressung zu hoch wird. Damit ist die Rauheitsmessung hiermit zumindest nahezu normgerecht.

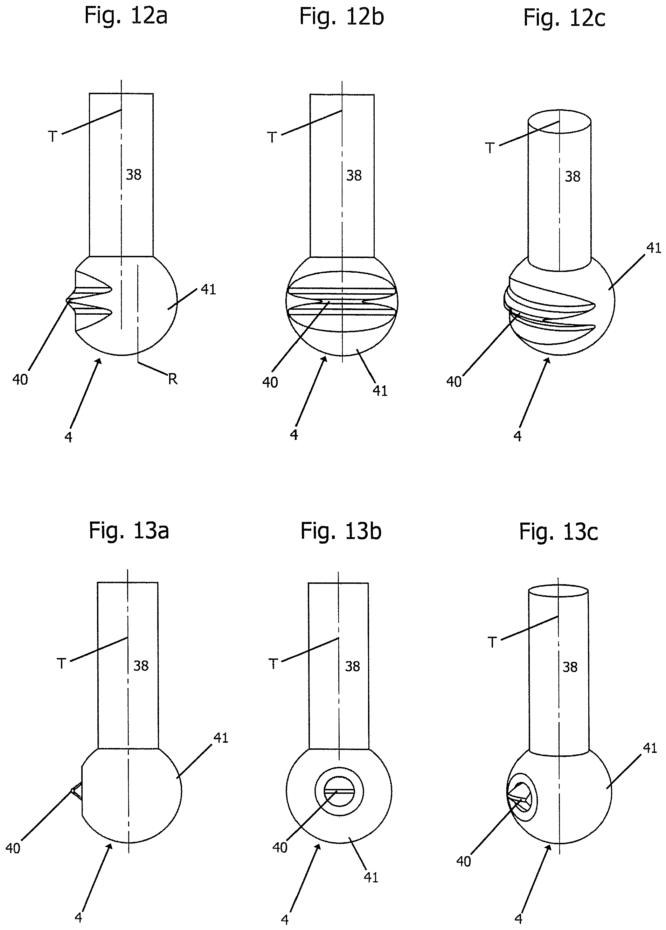

Fig. 12a bis 12c zeigen eine erste Variante und Fig. 13a bis 13c zeigen eine zweite Variante eines Taststiftes mit einem ersten Tastkopf 40 zur Rauheitsmessung und einem zweiten Tastkopf 41 zur Konturmessung. Der Taststift weist dabei einen zylindrischen Schaft 38 auf, an dessen unteren Ende in axialer Richtung ein Prüfkopf 4 angeordnet ist, der den ersten Tastkopf 40 und den zweiten Tastkopf 41 umfasst. Bis auf einen Bereich, in dem der erste Tastkopf 40 ausgebildet ist, und bis auf einen Bereich, in dem der Prüfkopf 4 in Verbindung mit dem Schaft 38 steht, hat der Prüfkopf 4 eine nahezu kugelförmige Gestalt. Fig. 12a und Fig. 13a zeigen eine Seitenansicht auf den ersten Tastkopf 40 des jeweiligen Taststifts, in welcher der erste Tastkopf 40 auf der linken Seite des Prüfkopfs 4 angeordnet ist. Im Gegensatz dazu zeigen Fig. 12b und 13b eine Frontansicht auf den ersten Tastkopf 41 des jeweiligen Taststifts, in welcher der Taststift gegenüber der Darstellung in Fig. 12a bzw. Fig. 13a in einem Winkel von etwa 90° um den Schaft 38 nach rechts gedreht ist. In Fig. 12c und 13c ist weiterhin eine räumliche Darstellung der jeweiligen Taststifte dargestellt.

Der erste Tastkopf 40 ist als ein Abschnitt eines ersten Prüfkörpers mit Doppelkegelstumpfgestalt ausgebildet. Der erste Prüfkörper ist dabei rotationssymmetrisch zu einer Symmetrieachse, die parallel zur Längsachse des zylindrischen Schafts T verläuft. Die Kontaktstelle des ersten Tastkopfes 40 liegt im Bereich des größten Radius des ersten Prüfkörpers, wobei die Vorschubrichtung zur Rauheitsmessung normal? zur Kontaktstelle vorgesehen ist. Wäre nicht besser "in Längsachse des Schaftes"? Der zweite Tastkopf 41 ist ein Abschnitt eines kugelförmigen zweiten Prüfkörpers, der rotationssymmetrisch zur Längsachse des Schafts T ist und dem kugelförmigen Abschnitt des Prüfkopfs 4 entspricht. Die Kontaktstelle des zweiten Tastkopfs 41 entspricht somit teilweise der Mantelfläche des Prüfkopfes 4 und erstreckt sich bevorzugt von einem Bereich, der an der gegenüberliegenden Seite zum ersten Tastkopf ausgebildet ist, bis zu einem Bereich am unteren, distalen Ende des Prüfkopfes 4.
In Fig. 12a bis 12c ist eine erste Variante des Taststiftes veranschaulicht. In dieser Ausführungsform ist der erste Prüfkörper rotationsymmetrisch zur Rotationsachse R, welche parallel zur Längsachse des Schafts T ist, dieser jedoch nicht entspricht. Der Radius im Bereich des größten Durchmessers des ersten Prüfkörpers, d.h., der Abstand zwischen der Kontaktstelle des ersten Tastkopfes 40 und der Rotationsachse R, entspricht dabei nahezu der Summe aus dem Radius des zweiten Prüfkörpers und dem Abstand zwischen der Längsachse des Schafts T und der Rotationsachse R. Im Bereich des ersten Tastkopfes 40 weist der Prüfkopf 4 einen Abschnitt eines zylindrischen Körpers auf, der ebenfalls rotationsymmetrisch zur Rotationsachse T ist und an welchem mittig an der Mantelfläche der erste Tastkopf 40 ausgebildet ist. Dabei ist der Radius des zylindrischen Körpers kleiner als der Radius im Bereich des größten Durchmessers des ersten Prüfkörpers. In diesem Bereich entspricht die Gestalt des Prüfkopfes 4 der Schnittmenge des ersten Prüfkörpers und des zweiten Prüfkörpers.

In Fig. 13a bis 13c ist eine zweite Variante eines Taststiftes veranschaulicht, in welcher der Prüfkopf 4 im Bereich des ersten Tastkopfes 40 einen fehlenden Kugelabschnitt aufweist und somit eine kreisförmige Fläche hat. In dieser Ausführungsform ist der erste Tastkopf 40 in axialer Verlängerung eines stangenförmigen Stiftes ausgebildet, der mittig aus der kreisförmigen Fläche des Prüfkopfes 4 herausragt und zu dieser orthogonal angeordnet ist.
Mit Ausnahme des für Prüfkörper 40 ausgenommenen Bereiches können die kugelförmigen Prüfkörper 41 gemäß Fig. 12 u. 13 wie ein Standardtaststift für Antastungen unterschiedlicher Vektorrichtung verwendet werden.

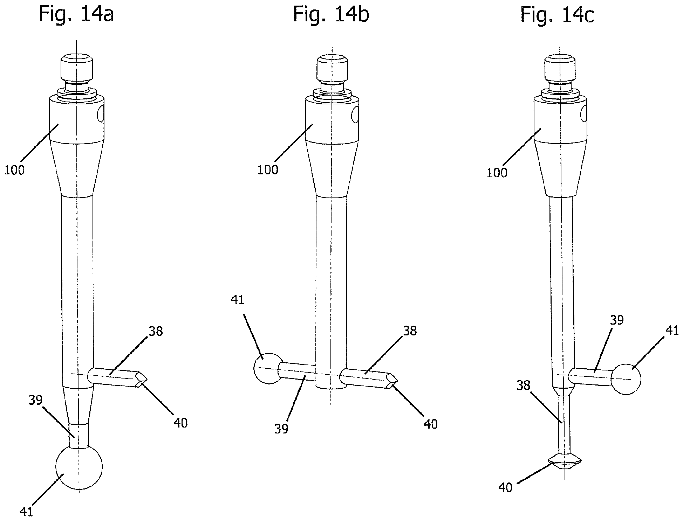

Fig. 14a bis 14c zeigen Varianten von Rauheitsmesseinsätzen mit einem ersten Tastkopf 40 zur Rauheitsmessung und einen zweiten Tastkopf 41 zur Konturmessung, die an unterschiedlichen Abschnitten eines Taststiftes angeordnet sind.

In Fig. 14a ist eine erste Ausführungsform eines solchen Rauheitsmesseinsatzes veranschaulicht. Gezeigt ist ein Rauheitsmesseinsatz mit einem Gehäuse 100,(Begriff "Gehäuse" wird bereits bei der Messwerkbeschreibung ab S. 7 verwendet und ist hier nicht treffend. Der mit 100 gekennzeichnete Teil stellt eigentlich nur eine Verdickung des Schaftes dar) an welchem in axialer Richtung ein zylindrischer Schaft angeordnet ist, der sich in Richtung des distalen Endes des Rauheitsmesseinsatzes erstreckt. Am distalen Ende des Schaftes sind weiterhin ein zylindrischer erster Abschnitt 38 und ein zylindrischer zweiter Abschnitt 39 angeordnet. Der erste Tastkopf 40 ist am distalen Ende des zylindrischen ersten Abschnitts 38 ausgebildet, wohingegen der zweite Tastkopf 41 am distalen Ende des zylindrischen zweiten Abschnitts 39 ausgebildet ist. In Fig. 14a ist der zylindrische zweite Abschnitt 39 als axiale Verlängerung des Schafts ausgestaltet. Proximal vor dem zylindrischen zweiten Abschnitt 39 ist der erste zylindrische Abschnitt 38 orthogonal zu diesem angeordnet. Dabei ist der erste Tastkopf 40 in axialer Verlängerung des zylindrischen ersten Abschnitts 38 ausgebildet. Der erste Tastkopf 40 ist ein Abschnitt eines ersten Prüfkörpers mit Doppelkegelstumpfgestalt, bei dem die Kontaktstelle im Bereich des größten Radius liegt. Die Vorschubrichtung zur Rauheitsmessung ist normal zum größten Radius des ersten Prüfkörpers bzw. parallel zum Schaft vorgesehen. Der zweite Tastkopf 41 entspricht, bis auf einen Bereich, in welchem der zylindrische zweite Abschnitt 39 mit dem zweiten Tastkopf 41 verbunden ist, einem kugelförmigen zweiten Prüfkörper, dessen Radius größer ist als der Radius des zylindrischen zweiten Abschnitts 39. Der zweite Tastkopf 41 ist dabei rotationssymmetrisch zum zylindrischen zweiten Abschnitt 39.

Da sich die weiteren Ausführungsformen des Rauheitsmesseinsatzes, die in Fig. 14b und 14c gezeigt sind, und die vorangegangene, in Fig. 14a dargestellte Ausführungsform ähneln und gleichartige Komponenten mit denselben Bezugszeichen dargestellt sind, wird in der weiteren Beschreibung nur auf Unterschiede zu der vorangegangenen Ausführungsform eingegangen.

In Fig. 14b ist eine Variante des Rauheitsmesseinsatzes veranschaulicht, bei der der zylindrische zweite Abschnitt 39, an dessen distalen Ende der zweite Tastkopf 41 ausgebildet ist, ebenfalls orthogonal zum Schaft bereitgestellt ist. In dieser Ausführungsform sind der zylindrische erste Abschnitt 38 und der zylindrische zweite Abschnitt 39 an gegenüberliegenden Seiten des Schafts angeordnet, derart, dass sich diese in ihrer Längsachse entsprechen.

Fig. 14c zeigt eine weitere Ausführungsform, in welcher der zylindrische zweite Abschnitt 39 mit dem zweiten Tastkopf 41 orthogonal zum Schaft angeordnet ist, wohingegen der zylindrische erste Abschnitt 38 mit dem ersten Tastkopf 40 in axialer Verlängerung zum Schaft ausgebildet ist. Dabei hat der erste Tastkopf 40 eine Doppelkegelstumpfgestalt und ist rotationssymmetrisch zum zylindrischen ersten Abschnitt 38, wobei die Kontaktstelle im Bereich des größten Radius des ersten Tastkopfs 40 liegt. Die Vorschubrichtung zur Rauheitsmessung ist daher, den vorangegangenen Ausführungsformen entsprechend, parallel zur Längsachse des Schafts vorgesehen.

Es sei bemerkt, dass obwohl hier numerische Bereiche und numerische Werte offenbart wurden, dass alle numerischen Werte zwischen den offenbarten Werten und jedem numerischen Unterbereich innerhalb der genannten Bereiche als ebenfalls offenbart anzusehen sind. Es sei ferner darauf hingewiesen, dass während eine Zahl für ein Verhältnis zwischen den verschiedenen Abmessungen des hier beschriebenen stiftförmigen Bauteils angegeben ist, dass jedes spezielle stiftförmige Bauteil der hier beschriebenen Art nicht notwendigerweise jedes und alle Verhältnisse zwischen den verschiedenen hier angegebenen Abmessungen verwirklichen muss.

## Patentansprüche

1. Multidirektionaler Rauheitsmesseinsatz (M) zum Bestimmen einer für die Rauheit einer Oberfläche charakteristischen Messgröße, mit
- einem multidirektionalen Messwerk, das
-- einen Tragkörper (26), an dem zum Aufnehmen eines Taststifts (38) eine Taststiftaufnahme (36) angeordnet ist, und
-- einen Analogsensor (50), der Auslenkungen des Taststifts (38) in einer beliebigen Richtung in für die Rauheit einer Oberfläche eines Werkstücks (O) charakteristische Mess-Signale umsetzt, umfasst, und
- den mit dem Tragkörper (26) zu koppelnden Taststift (38), der
-- einen stangenförmigen Schaft (38) und
-- einen an dem Schaft (38) angebrachten Tastkopf (40) umfasst, wobei
- der Tastkopf (40) zumindest ein Abschnitt eines zumindest zu einem Abschnitt des stangenförmigen Schafts (38) im Wesentlichen rotationssymmetrischen Prüfkörpers ist, oder wobei
- der Tastkopf (40) zumindest ein Abschnitt eines im Wesentlichen rotationssymmetrischen Prüfkörpers ist, der an einem distalen Ende zumindest eines Abschnitts des stangenförmigen Schafts (38) angeordnet ist, und wobei
- der Prüfkörper eine Doppelkegelgestalt oder Doppelkegelstumpfgestalt hat und ein Bereich des größten Durchmessers des Prüfkörpers als Kontaktstelle zu einer zu messenden Oberfläche eines Werkstücks (O) ausgebildet ist, und wobei
- die Kontaktstelle durch zwei Doppelkegel- oder Doppelkegelstumpf-Mantelflächen gebildet ist, und die Kontaktstelle im Bereich des größten Durchmessers des Prüfkörpers abgerundet ist.

2. Multidirektionaler Rauheitsmesseinsatz (M) nach Anspruch 1, bei dem der stangenförmige Schaft (38) in geradliniger Verlängerung mit einem Übertragungsglied direkt oder indirekt gekoppelt ist oder mit etwa 0° bis etwa 100° abgewinkelt mit dem Übertragungsglied gekoppelt ist.

3. Multidirektionaler Rauheitsmesseinsatz (M) nach einem der Ansprüche 1 bis 2, bei dem die Kontaktstelle in Abhängigkeit der zu erwartenden Oberflächenrauheit, des Wegs in Vorschubrichtung (V) des Werkstücks (O) oder des Rauheitsmesseinsatzes (M), der pro Umdrehung oder Hub zurückgelegt wird, des Vorschubs oder der Werkzeuggeometrie, der Werkstückgeometrie und der Werkstofffestigkeit festgelegt ist.

4. Multidirektionaler Rauheitsmesseinsatz (M) nach einem der Ansprüche 1 bis 3, bei dem die Kontaktstelle des Prüfkörpers eine Doppelkegelgestalt oder Doppelkegelstumpfgestalt mit jeweiligen Kegelwinkeln (KW) von etwa 30°-130° hat.

5. Multidirektionaler Rauheitsmesseinsatz (M) nach einem der Ansprüche 1 bis 4, bei dem die Kontaktstelle des Prüfkörpers im Bereich des größten Durchmessers einen Radius (R2) von etwa 1,5 mm bis etwa 5 mm oder 0,4 mm bis etwa 3 mm und jeweilige Kegelwinkel von etwa 30° bis etwa 130° hat.

6. Multidirektionaler Rauheitsmesseinsatz (M) nach einem der Ansprüche 1 bis 5, bei dem die Kontaktstelle des Prüfkörpers im Bereich des größten Durchmessers einen Kantenradius (R3) von etwa 5 µm bis etwa 50 µm hat, und wobei die Krümmung der Kontaktstelle des Prüfkörpers einen konstanten Wert hat, oder die Krümmung entlang eines gekrümmten Bereichs der Kontaktstelle des Prüfkörpers sich verändert.

7. Multidirektionaler Rauheitsmesseinsatz (M) nach einem der Ansprüche 1 bis 6, bei dem die Kontaktstelle des Prüfkörpers eine Vorschubrichtung (V) hat, welche zumindest annähernd in Achsrichtung des größeren Radius (R2) orientiert ist, wobei der Tastkopf (40) dazu eingerichtet ist, in der Vorschubrichtung (V) über die Oberfläche des Werkstücks (O) verfahren zu werden.

8. Multidirektionaler Rauheitsmesseinsatz (M) nach einem der Ansprüche 1 bis 5, mit einer mit dem Analogsensor (50) gekoppelten Verarbeitungseinheit, um aus den Mess-Signalen zumindest eine für die Rauheit einer Oberfläche charakteristische Messgröße zu ermitteln, wobei die Verarbeitungseinheit entweder in dem Gehäuse (100) des Rauheitsmesseinsatzes (M) angeordnet ist, oder davon getrennt ist.

9. Multidirektionaler Rauheitsmesseinsatz (M) nach Anspruch 1 bis 8, bei dem der Taststift (38) weiterhin einen zweiten Tastkopf (41) umfasst, wobei der zweite Tastkopf (41) zumindest ein Abschnitt eines im Wesentlichen kugelförmigen oder ellipsoiden Prüfkörpers ist, der an einem distalen Ende zumindest eines Abschnitts des stangenförmigen Schafts (38) des Taststifts angeordnet ist.

10. Rauheitsmessverfahren zum Bestimmen einer für die Rauheit einer Oberfläche eines Werkstücks (O) charakteristischen Messgröße, mit einem multidirektionalen Rauheitsmesseinsatz (M) gemäß einem der Ansprüche 1 bis 9, unter Anwendung der Schritte:
a) Antasten des Tastkopfes (40) an die zu messende Oberfläche, damit der Tastkopf (40) eine vordefinierte Auslenkung aus seiner Ruhelage einnimmt;
b) Einstellen einer Prüflast durch weiteres Anfahren oder Zurückfahren des Rauheitsmesseinsatzes (M) relativ zur zu messenden Oberfläche, wobei das Einstellen der Prüflast in Abhängigkeit von der Gestalt des Tastkopfes (40) und der Gestalt der zu messenden Oberfläche eines Werkstücks (O) erfolgt;
c) Einschalten einer Betriebsart "Rauheitsmessung", in der nachfolgend erfasste Mess-Signale aufgezeichnet und/oder verarbeitet werden;
d) Abfahren einer vorgestimmten Mess-Strecke entlang einer vorbestimmten Mess-Richtung;
e) Umsetzen der Bewegungen der Tastspitze in für die Rauheit der Oberfläche charakteristische Mess-Signale;
f) Auswerten der Mess-Signale, um wenigstens eine für die Rauheit einer Oberfläche charakteristischen Messgröße zu bestimmen; und
g) Aussenden der wenigstens einen bestimmten Messgröße an eine Maschinensteuerung.

11. Rauheitsmessverfahren nach dem vorstehenden Anspruch, wobei der Schritt a) des Antastens des Tastkopfes (40) an die zu messende Oberfläche durch Anfahren des Rauheitsmesseinsatzes (M) in einer Werkzeugmaschine relativ zur zu messenden Oberfläche eines Werkstücks (O) erfolgt.

12. Rauheitsmessverfahren nach einem der vorstehenden Verfahrensansprüche, wobei der Schritt d) des Abfahrens einer vorgestimmten Mess-Strecke entlang einer vorbestimmten Mess-Richtung entweder ein Vorgeben einer von dem Tastkopf (40) zu überstreichenden Weg-Distanz oder ein Vorgeben einer Zeitdauer, während der der Tastkopf (40) die Mess-Strecke zurücklegt, umfasst, und die vorbestimmte Mess-Richtung eine beliebig zu wählende Richtung entlang der zu messenden Oberfläche umfasst.

13. Rauheitsmessverfahren nach einem der vorstehenden Verfahrensansprüche, wobei der Schritt f) des Auswertens der Mess-Signale ein Speichern und Verknüpfen der Mess-Signale zu wenigstens einem der für die Rauheit der Oberfläche charakteristischen Messgrößen: arithmetischer Mittenrauwert, gemittelte Rautiefe, quadratischer Mittenrauwert, maximale Einzelrautiefe, Rautiefe, mittlere Glättungstiefe, mittlere Riefentiefe, mittlere Rillenbreite, Wellentiefe, Profiltiefe umfasst.

14. Rauheitsmessverfahren nach einem der vorstehenden Verfahrensansprüche, wobei die Schritte a) bis g) in einer Werkzeugmaschine ausgeführt werden, wobei der Rauheitsmesseinsatz (M) anstelle eines Werkzeugs in einer Spindel der Werkzeugmaschine eingesetzt wird, und die Mess-Signale und oder die Messgröße an eine Maschinensteuerung der Werkzeugmaschine ausgegeben werden.

15. Rauheitsmessverfahren nach dem vorstehenden Verfahrensanspruch, wobei die Schritte a) bis g) nach und/oder vor Bearbeitungsschritten mittels wenigstens eines Werkzeuges an dem Werkstück (O) in der Werkzeugmaschine ausgeführt werden, und/oder wobei der Rauheitsmesseinsatz (M) im Schritt d) Abfahren einer vorgestimmten Mess-Strecke entlang einer vorbestimmten Mess-Richtung so orientiert ist, dass die Kontaktstelle des Prüfkörpers eine Vorschubrichtung (V) hat, welche zumindest annähernd in Achsrichtung des größeren Radius (R2) des Prüfkörpers orientiert ist, und die Tangentenrichtung des größeren Radius (R2) zumindest annähernd parallel zu einer zu messenden Rillenrichtung des Werkstückes (O) ausgerichtet ist.

## Claims

1. A multidirectional roughness measurement insert (M) for determining a measured variable that is characteristic of the roughness of a surface, having
- a rotationally symmetrical measuring unit, comprising
- a carrier body (26), on which is arranged a stylus holder (36) for holding a stylus (38), and
- an analog sensor (50), which converts the deflections of the stylus (38) in any direction into measurement signals that are characteristic of the roughness of the surface of a workpiece (0), and
- the stylus (38) to be coupled to the carrier body (26), comprising
- a rod-shaped shaft (38) and
- a scanning head (40) mounted on the shaft (38), wherein
- the scanning head (40) is at least one section of a test body, which is essentially rotationally symmetrical to at least one section of the rod-shaped shaft (38), or wherein
- the scanning head (40) is at least one section of an essentially rotationally symmetrical test body, which is arranged on a distal end of at least one section of the rod-shaped shaft (38), and wherein
- the test body has a double conical shape or a double truncated conical shape, and a region of the largest diameter of the test body is formed as the contact point to a surface of a workpiece (O) to be measured, and wherein
- the contact point is formed by two double conical lateral surfaces or double truncated conical lateral surfaces, and the contact point is rounded in the region of the largest diameter of the test body.

2. The multidirectional roughness measurement insert (M) according to claim 1, wherein the rod-shaped shaft (38) is coupled directly or indirectly in a linear extension to a transmission element or is coupled to the transmission element at approx. 0° to approx. 100°.

3. The multidirectional roughness measurement insert (M) according to any one of claims 1 to 2, wherein the contact point is defined as a function of the expected peak-to-valley height, the distance to be traveled per revolution or per stroke in the feed direction (V) of the workpiece (O) or of the roughness measurement insert (M), the forward feed or the tool geometry, the workpiece geometry and the strength of the material.

4. The multidirectional roughness measurement insert (M) according to any one of claims 1 to 3, wherein the contact point of the test body has a double conical shape or a double truncated conical shape, each with cone angles (KW) of approximately 30° to 130°.

5. The multidirectional roughness measurement insert (M) according to any one of claims 1 to 4, wherein the contact point on the test body in the region of the largest diameter has a radius (R2) of approx. 1,5 mm to approx. 5 mm or 0,4 mm to approx. 3 mm, and the respective cone angle is approx. 30° to approx. 130°.

6. The multidirectional roughness measurement insert (M) according to any one of claims 1 to 5, wherein the contact point of the test body in the region of the largest diameter has an edge radius (R3) of approx. 5 µm to approx. 50 µm and wherein the curvature of the contact point of the test body has a constant value, or the curvature changes along a curved region of the contact point of the test body.

7. The multidirectional roughness measurement insert (M) according to any one of claims 1 to 6, wherein the contact point of the test body has a feed direction (V), which is oriented at least approximately in the axial direction of the larger radius (R2), wherein the scanning head (40) is equipped to be moved in the feed direction (V) over the surface of the workpiece (O).

8. The multidirectional roughness measurement insert (M) according to any one of claims 1 to 5, having a processing unit coupled to the analog sensor (50) to determine from the measurement signals a measured variable that is characteristic of the roughness of a surface, wherein the processing unit is either arranged in the housing (100) of the roughness measurement insert (M) or is separate therefrom.

9. The multidirectional roughness measurement insert (M) according to claims 1 to 8, wherein the stylus (38) also comprises a second scanning head (41), wherein the second scanning head (41) is at least one section of an essentially spherical or ellipsoidal test body, which is arranged on a distal end of at least one section of the rod-shaped shaft (38) of the stylus.

10. A roughness measurement method for determining a measured variable that is characteristic of the roughness of the surface of workpiece (O), having a multidirectional roughness measurement insert (M) according to any one of claims 1 to 9, employing the steps:
a) Approaching the scanning head (40) to the surface to be measured, so that the scanning head (40) assumes a predefined deflection out of its resting position;
b) Setting a test load by further approach or retraction of the roughness measurement insert (M) in relation to the surface to be measured, wherein the test load is adjusted as a function of the shape of the scanning head (40) and the shape of the surface of the workpiece (O) to be measured;
c) Activating a "roughness measurement" mode, in which subsequently detected measurement signals are recorded and/or processed;
d) Traveling along a predetermined measurement distance along a predetermined measurement direction;
e) Converting the movements of the stylus into measurement signals that are characteristic of the roughness of the surface;
f) Evaluating the measurement signals to determine at least one measured variable that is characteristic of the roughness of the surface and
g) Sending at least one measured variable thus determined to a machine controller.

11. The roughness measurement method according to the preceding claim, wherein step a) is to bring the scanning head (40) to the surface to be measured by the approach of the roughness measurement insert (M) in a machine tool in relation to the surface of the workpiece (O) to be measured by scanning.

12. The roughness measurement method according to any one of the preceding method claims, wherein step d) of traveling a predetermined measurement distance along a predetermined measurement direction comprises either stipulation of a path distance to be traveled by the scanning head (40) or stipulation of a period of time during which the scanning head (40) travels the measurement distances, and the predetermined measurement direction comprises any direction to be selected along the surface to be measured.

13. The roughness measurement method according to any one of the preceding method claims, wherein step f) of analyzing the measurement signals comprises saving and linking the measurement signals to form at least one of the measured variables that are characteristic of the roughness of the surface: arithmetic mean roughness, average peak-to-valley height, square mean roughness, maximum individual peak-to-valley height, peak-to-valley height, mean smoothing depth, mean depth of groove, mean width of groove, depth of wave, depth of profile.

14. The roughness measurement method according to any one of the preceding method claims, wherein steps a) through g) are carried out in a machine tool, wherein the roughness measurement insert (M) is used in a spindle of the machine tool instead of using a tool and the measurement signals and/or the measured variable is/are output to a machine controller of the machine tool.

15. The roughness measurement method according to any one of the preceding method claims, wherein steps a) through g) are carried out before and/or after machining steps by means of at least one tool on the workpiece (O) in the machine tool, and/or wherein the roughness measurement insert (M) in step d) of traveling over a predetermined measurement distance along a predetermined measurement direction is oriented so that the contact point of the test body has a feed direction (V), which is oriented at least approximately in the axial direction of the larger radius (R2) of the test body, and the tangential direction of the larger radius (R2) is at least approximately parallel to a groove direction of the workpiece (O) to be measured.

## Revendications

1. Insert de mesure de rugosité multidirectionnel (M) pour déterminer une grandeur de mesure caractéristique de la rugosité d'une surface, comprenant
- un équipage de mesure multidirectionnel comprenant
-- un corps porteur (26) sur lequel est disposé un support de palpeur (36) destiné à recevoir un palpeur (38), et
-- un capteur analogique (50) qui convertit les déviations du palpeur (38) dans une direction quelconque en signaux de mesure caractéristiques de la rugosité d'une surface d'une pièce (0), et
- le palpeur (38) à coupler au corps porteur (26) comprenant
-- un corps en forme de tige (38) et
-- une tête de palpage (40) montée sur le corps (38), dans lequel
- la tête de palpage (40) est au moins une partie d'un corps d'épreuve sensiblement à symétrie de révolution par rapport à au moins une partie du corps en forme de tige (38), ou dans lequel
- la tête de palpage (40) est au moins une partie d'un corps d'épreuve sensiblement à symétrie de révolution, qui est disposé à une extrémité distale d'au moins une partie du corps en forme de tige (38), et dans lequel
- le corps d'épreuve a une forme biconique ou une forme biconique tronquée et une zone de plus grand diamètre du corps d'épreuve est conçue comme point de contact avec une surface à mesurer d'une pièce (O), et dans lequel
- le point de contact est formé par deux surfaces d'enveloppe biconiques ou biconiques tronquées, et le point de contact est arrondi dans la zone de plus grand diamètre du corps d'épreuve.

2. Insert de mesure de rugosité multidirectionnel (M) selon la revendication 1, dans lequel le corps en forme de tige (38) est couplé directement ou indirectement à un élément de transmission en prolongement rectiligne ou couplé à l'élément de transmission à un angle d'environ 0° à environ 100°.

3. Insert de mesure de rugosité multidirectionnel (M) selon l'une des revendications 1 à 2, dans lequel le point de contact est défini en fonction de la rugosité de surface à attendre, du chemin dans la direction d'avance (V) de la pièce (O) ou de l'insert de mesure de rugosité (M) qui est parcouru par révolution ou course, de l'avance ou de la géométrie de l'outil, de la géométrie de la pièce et de la résistance mécanique du matériau.

4. Insert de mesure de rugosité multidirectionnel (M) selon l'une des revendications 1 à 3, dans lequel le point de contact du corps d'épreuve a une forme biconique ou une forme biconique tronquée avec des angles de cône (KW) respectifs d'environ 30° à 130°.

5. Insert de mesure de rugosité multidirectionnel (M) selon l'une des revendications 1 à 4, dans lequel le point de contact du corps d'épreuve a dans la zone de plus grand diamètre un rayon (R2) d'environ 1,5 mm à environ 5 mm ou de 0,4 mm à environ 3 mm et des angles de cône respectifs d'environ 30° à environ 130°.

6. Insert de mesure de rugosité multidirectionnel (M) selon l'une des revendications 1 à 5, dans lequel le point de contact du corps d'épreuve a dans la zone de plus grand diamètre un rayon d'arête (R3) d'environ 5 µm à environ 50 µm, et dans lequel la courbure du point de contact du corps d'épreuve a une valeur constante ou la courbure le long d'une zone courbe du point de contact du corps d'épreuve varie.

7. Insert de mesure de rugosité multidirectionnel (M) selon l'une des revendications 1 à 6, dans lequel le point de contact du corps d'épreuve a une direction d'avance (V) qui est orientée au moins approximativement dans la direction axiale du plus grand rayon (R2), la tête de palpage (40) étant conçue pour être déplacée dans la direction d'avance (V) sur la surface de la pièce (O).

8. Insert de mesure de rugosité multidirectionnel (M) selon l'une des revendications 1 à 5, avec une unité de traitement couplée au capteur analogique (50) pour déterminer, à partir des signaux de mesure, au moins une grandeur de mesure caractéristique de la rugosité d'une surface, l'unité de traitement étant soit disposée dans le boîtier (100) de l'insert de mesure de rugosité (M), soit séparée de celui-ci.

9. Insert de mesure de rugosité multidirectionnel (M) selon l'une des revendications 1 à 8, dans lequel le palpeur (38) comprend en outre une deuxième tête de palpage (41), laquelle deuxième tête de palpage (41) étant au moins une partie d'un corps d'épreuve sensiblement sphérique ou ellipsoïdal disposé à une extrémité distale d'au moins une partie du corps en forme de tige (38) du palpeur.

10. Procédé de mesure de rugosité pour déterminer une grandeur de mesure caractéristique de la rugosité d'une surface d'une pièce (O), avec un insert de mesure de rugosité multidirectionnel (M) selon l'une des revendications 1 à 9, en appliquant les étapes suivantes :
a) mise en contact de la tête de palpage (40) avec la surface à mesurer afin que la tête de palpage (40) adopte une déviation prédéfinie par rapport à sa position de repos ;
b) réglage d'une charge d'épreuve par avance supplémentaire ou recul de l'insert de mesure de rugosité (M) par rapport à la surface à mesurer, le réglage de la charge d'épreuve se faisant en fonction de la forme de la tête de palpage (40) et de la forme de la surface à mesurer d'une pièce (O) ;
c) activation d'un mode de fonctionnement « mesure de rugosité » dans lequel des signaux de mesure détectés par la suite sont enregistrés et/ou traités ;
d) parcours d'une section de mesure prédéterminée suivant une direction de mesure prédéterminée ;
e) conversion des mouvements de la pointe de palpage en signaux de mesure caractéristiques de la rugosité de la surface ;
f) évaluation des signaux de mesure pour déterminer au moins une grandeur de mesure caractéristique de la rugosité d'une surface ; et
g) envoi de la dite au moins une grandeur de mesure déterminée à une commande de machine.

11. Procédé de mesure de rugosité selon la revendication précédente, dans lequel l'étape a) de mise en contact de la tête de palpage (40) avec la surface à mesurer est effectuée par approche de l'insert de mesure de rugosité (M) dans une machine-outil par rapport à la surface à mesurer d'une pièce (O).

12. Procédé de mesure de rugosité selon l'une des revendications de procédé précédentes, dans lequel l'étape d) de parcours d'une section de mesure prédéterminée suivant une direction de mesure prédéterminée comprend soit une prédéfinition d'une distance de chemin à balayer par la tête de palpage (40), soit une prédéfinition d'une durée pendant laquelle la tête de palpage (40) parcourt la section de mesure, et la direction de mesure prédéterminée comprend une direction quelconque à choisir le long de la surface à mesurer.

13. Procédé de mesure de rugosité selon l'une des revendications de procédé précédentes, dans lequel l'étape f) d'évaluation des signaux de mesure comprend un enregistrement et une combinaison des signaux de mesure en au moins une des grandeurs de mesure caractéristiques de la rugosité de la surface : rugosité moyenne arithmétique, profondeur moyenne de rugosité, rugosité moyenne quadratique, profondeur maximale de rugosité individuelle, profondeur de rugosité, profondeur moyenne d'usinage, profondeur moyenne de creux, largeur moyenne des stries, profondeur d'ondulation, profondeur de profil.

14. Procédé de mesure de rugosité selon l'une des revendications de procédé précédentes, dans lequel les étapes a) à g) sont exécutées dans une machine-outil, l'insert de mesure de rugosité (M) étant inséré à la place d'un outil dans une broche de la machine-outil, et les signaux de mesure et ou la grandeur de mesure étant transmis à une commande de machine de la machine-outil.

15. Procédé de mesure de rugosité selon la revendication de procédé précédente, dans lequel les étapes a) à g) sont exécutées après et/ou avant des étapes d'usinage au moyen d'au moins un outil sur la pièce (O) dans la machine-outil, et/ou dans lequel l'insert de mesure de rugosité (M) à l'étape d) parcours d'une section de mesure prédéterminée suivant une direction de mesure prédéterminée est orienté de façon que le point de contact du corps d'épreuve ait une direction d'avance (V) qui soit orientée au moins approximativement dans la direction axiale du plus grand rayon (R2) du corps d'épreuve et que la direction tangentielle au plus grand rayon (R2) soit orientée au moins approximativement parallèlement à une direction des stries à mesurer de la pièce (O).
